(19) Europäisches Patentamt
European Patent Office
Office européen des brevets

(11) **EP 2 723 013 B1**

(12) **EUROPEAN PATENT SPECIFICATION**

(45) Date of publication and mention
of the grant of the patent:
**27.10.2021 Bulletin 2021/43**

(51) Int Cl.:
***H04L 1/18*** (2006.01)

(21) Application number: **13196774.7**

(22) Date of filing: **28.11.2009**

(54) **Encoding method and device**

Kodierungsverfahren und -vorrichtung

Procédé et dispositif de codage

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.11.2008 CN 200810169195**
**16.06.2009 CN 200910149413**

(43) Date of publication of application:
**23.04.2014 Bulletin 2014/17**

(62) Document number(s) of the earlier application(s) in accordance with Art. 76 EPC:
**09824434.6 / 2 256 984**

(73) Proprietor: **Huawei Technologies Co., Ltd.**
**Shenzhen, Guangdong 518129 (CN)**

(72) Inventors:
• **Fan, Shuju**
**shenzhen (CN)**
• **Li, Jing**
**shenzhen (CN)**
• **Liu, Zheng**
**shenzhen (CN)**
• **Ma, Xueli**
**shenzhen (CN)**
• **Wang, Zongjie**
**shenzhen (CN)**

(74) Representative: **Körber, Martin Hans et al**
**Mitscherlich PartmbB**
**Patent- und Rechtsanwälte**
**Sonnenstraße 33**
**80331 München (DE)**

(56) References cited:
**EP-A1- 1 956 743**

• **3GPP TSG-RAN WG1: "Introduction of Dual-Cell HSDPA Operation on Adjacent Carriers", WG1 Meeting 54bis, 29.09.2008-03.10.2008 , no. R1-084030 3 October 2008 (2008-10-03), XP002637850, Retrieved from the Internet: URL:http://ftp.3gpp.org/ftp/tsg_ran/WG1_RL 1/TSGR1_54b/Docs/R1-084030.zip [retrieved on 2011-05-19]**
• **TEXAS INSTRUMENTS: "Multiple ACK/NAK Transmission in TDD", 3GPP DRAFT; R1-083124, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), XP050316562, [retrieved on 2008-08-12]**
• **None**

**Description**

Field of the Invention

The present invention relates to the field of telecommunication technology, and particularly, to encoding method and device.

Background

In the Wide Code Division Multiple Access (WCDMA) system, if Dual Cell High-Speed Downlink Packet Access (DC-HSDPA) is configured and two Uplink High-Speed Dedicated Physical Control Channels (HS-DPCCHs) are used for the two Downlink carriers, the transmitting power may be limited, so that the coverage will be impacted. In order to save the power resources, it is a feasible scheme that only one HS-DPCCH is used for performing an Acknowledgement (ACK)/ Negative Acknowledgement (NACK) feedback when the User Equipment (UE) is configured two carries but not configured with Multiple Input Multiple Output (MIMO). Therefore, ACK/NACK feedback information responding to the data transmitted on two carriers (cells) needs to be encoded jointly, which means composite signal of Hybrid Automatic Repeat Request-Acknowledgement (HARQ-ACK) is mapped to one 0-1 sequence of 10 bits.

The Release 8 of the WCDMA specification introduces the technology of Dual Carrier in the Downlink, and the UE needs to feed back HARQ-ACK responding to the data transmitted by the two carriers. One feasible method is to jointly encode the feedback information responding to data transmitted on the two carriers and feed back on one HS-DPCCH, however, the prior art does not give an appropriate joint encoding scheme for transmitting the feedback information on one HS-DPCCH.

3GPP TSG-RAN WG1: "Introduction of Dual-Cell HSDPA Operation on Adjacent Carriers", WG1 Meeting 54bis, 29.09.2008-03.10.2008, no. R1-084030 3 October 2008 (2008-10-03), Retrieved from Internet: URL: http://ftp.3gpp.org/ftp/tsg_ran/WG1_RL1/TSGR1_54b/Docs/R1-084030.zip, describes a scheme of channel coding for the composite HS-DPCCH HARQ-ACK in Section 4.7.3A.1.

Summary of the Invention

The present invention provides a method for receiving a jointly encoded HARQ-ACK signal and a base station.

An aspect of the present invention provides a method for receiving a jointly encoded HARQ-ACK signal in a telecommunication system, where two carriers are configured without MIMO in downlink. The method includes:

transmitting, by a base station, data to a user equipment on the two carriers;

receiving, by the base station, a jointly encoded HARQ-ACK signal from the user equipment on one Uplink High-Speed Dedicated Physical Control Channel, HS-DPCCH, in response to the data transmitted on the two carriers;

wherein the jointly encoded HARQ-ACK signal is a 10-bit codeword and

the 10-bit codeword is {1,1,1,1,1,1,1,1,1,1} when a HARQ-ACK signal is ACK/DTX;

the 10-bit codeword is {0,0,0,0,0,0,0,0,0,0} when the HARQ-ACK signal is NACK/DTX;

the 10-bit codeword is {1,1,1,1,1,0,0,0,0,0} when the HARQ-ACK signal is DTX/ACK;

the 10-bit codeword is {0,0,0,0,0,1,1,1,1,1} when the HARQ-ACK signal is DTX/NACK;

the 10-bit codeword is {1,0,1,0,1,0,1,0,1,0} when the HARQ-ACK signal is ACK/ACK;

the 10-bit codeword is {1,1,0,0,1,1,0,0,1,1} when the HARQ-ACK signal is ACK/NACK;

the 10-bit codeword is {0,0,1,1,0,0,1,1,0,0} when the HARQ-ACK signal is NACK/ACK;

the 10-bit codeword is {0,1,0,1,0,1,0,1,0,1} when the HARQ-ACK signal is NACK/NACK;

wherein

the ACK/DTX indicates that data transmitted on primary carrier is correctly received while no data on secondary carrier is detected; the NACK/DTX indicates that data transmitted on the primary carrier is wrongly received and no data on the secondary carrier is detected; the DTX/ACK indicates that no data on the primary carrier is detected while data transmitted on the secondary carrier is correctly received; the DTX/NACK indicates that no data on the primary carrier is detected and data transmitted on the secondary carrier is wrongly received;

the ACK/ACK indicates that data transmitted on the primary carrier is correctly received and data transmitted on the secondary carrier is correctly received; the ACK/NACK indicates that data transmitted on the primary carrier is correctly received while data transmitted on the secondary carrier is wrongly received; the NACK/ACK indicates that data transmitted on the primary carrier is wrongly received while data transmitted on the secondary carrier is correctly received; the NACK/NACK indicates that data transmitted on the primary carrier is wrongly received and data transmitted on the secondary carrier is wrongly received;

retransmitting, by the base station, the data in accordance with the following table:

|     | A_D | N_D | D_A | D_N | A_A | A_N | N_A | N_N | D_D |
|-----|-----|-----|-----|-----|-----|-----|-----|-----|-----|
| A_D | 0/L | L/L | L/H | L/L | 0/H | 0/L | L/H | L/L | L/L |
| N_D | H/L | L/L | L/H | L/L | H/H | H/L | L/H | L/L | L/L |
| D_A | H/L | L/L | L/0 | L/L | H/0 | H/L | L/0 | L/L | L/L |
| D_N | H/L | L/L | L/H | L/L | H/H | H/L | L/H | L/L | L/L |
| A_A | 0/L | L/L | L/0 | L/L | 0/0 | 0/L | L/0 | L/L | L/L |
| A_N | 0/L | L/L | L/H | L/L | 0/H | 0/L | L/H | L/L | L/L |
| N_A | H/L | L/L | L/0 | L/L | H/0 | H/L | L/0 | L/L | L/L |
| N_N | H/L | L/L | L/H | L/L | H/H | H/L | L/H | L/L | L/L |
| D_D | H/L | L/L | L/H | L/L | H/H | H/L | L/H | L/L | L/L |

wherein L indicates data retransmission at physical layer, H indicates data retransmission at high layer and 0 indicates there is no retransmission. L/H indicates data transmitted on primary carrier is retransmitted at physical layer and data transmitted on secondary carrier is retransmitted at high layer; L/L indicates data transmitted on primary carrier is retransmitted at physical layer and data transmitted on secondary carrier is retransmitted at physical layer; H/L indicates data transmitted on primary carrier is retransmitted at high layer and data transmitted on secondary carrier is retransmitted at physical layer; H/H indicates data transmitted on primary carrier is retransmitted at high layer and data transmitted on secondary carrier is retransmitted at high layer; H/0 indicates data transmitted on primary carrier is retransmitted at high layer and no retransmission on secondary carrier; 0/H indicates no retransmission on primary carrier and data transmitted on secondary carrier is retransmitted at high layer; L/0 indicates data transmitted on primary carrier is retransmitted at physical layer and no retransmission on secondary carrier; 0/L indicates no retransmission on primary carrier and data transmitted on secondary carrier is retransmitted at physical layer; 0/0 indicates no retransmission on primary carrier and no retransmission on secondary carrier,

wherein the HARQ-ACK signals are represented as in the following table:

| Number | Signal | Signal Abbreviation |
|--------|--------|---------------------|
| 1 | ACK/DTX | A_D |
| 2 | NACK/DTX | N_D |
| 3 | DTX/ACK | D_A |
| 4 | DTX/NACK | D_N |
| 5 | ACK/ACK | A_A |
| 6 | ACK/NACK | A_N |
| 7 | NACK/ACK | N_A |
| 8 | NACK/NACK | N_N |
| 9 | DTX/DTX | D_D |

Another aspect of the present invention also provides a base station for receiving a jointly encoded HARQ-ACK signal in a telecommunication system, where two carriers are configured without MIMO in downlink. The base station includes:

means for transmitting data to a user equipment on the two carriers;

means for receiving a jointly encoded HARQ-ACK signal from the user equipment on one Uplink High-Speed Dedicated Physical Control Channel, HS-DPCCH, in response to the data transmitted on the two carriers;

wherein the jointly encoded HARQ-ACK signal is a 10-bit codeword and the 10-bit codeword is {1,1,1,1,1,1,1,1,1,1} when a HARQ-ACK signal is ACK/DTX;

the 10-bit codeword is {0,0,0,0,0,0,0,0,0,0} when the HARQ-ACK signal is NACK/DTX;

the 10-bit codeword is {1,1,1,1,1,0,0,0,0,0} when the HARQ-ACK signal is DTX/ACK;

the 10-bit codeword is {0,0,0,0,0,1,1,1,1,1} when the HARQ-ACK signal is DTX/NACK;

the 10-bit codeword is {1,0,1,0,1,0,1,0,1,0} when the HARQ-ACK signal is ACK/ACK;
the 10-bit codeword is {1,1,0,0,1,1,0,0,1,1} when the HARQ-ACK signal is ACK/NACK;
the 10-bit codeword is {0,0,1,1,0,0,1,1,0,0} when the HARQ-ACK signal is NACK/ACK;
the 10-bit codeword is {0,1,0,1,0,1,0,1,0,1} when the HARQ-ACK signal is NACK/NACK;
wherein

the ACK/DTX indicates that data transmitted on primary carrier is correctly received while no data on secondary carrier is detected; the NACK/DTX indicates that data transmitted on the primary carrier is wrongly received and no data on the secondary carrier is detected; the DTX/ACK indicates that no data on the primary carrier is detected while data transmitted on the secondary carrier is correctly received; the DTX/NACK indicates that no data on the primary carrier is detected and data transmitted on the secondary carrier is wrongly received; the ACK/ACK indicates that data transmitted on the primary carrier is correctly received and data transmitted on the secondary carrier is correctly received; the ACK/NACK indicates that data transmitted on the primary carrier is correctly received while data transmitted on the secondary carrier is wrongly received; the NACK/ACK indicates that data transmitted on the primary carrier is wrongly received while data transmitted on the secondary carrier is correctly received; the NACK/NACK indicates that data transmitted on the primary carrier is wrongly received and data transmitted on the secondary carrier is wrongly received;
means for retransmitting the data in accordance with the following table:

|  | A_D | N_D | D_A | D_N | A_A | A_N | N_A | N_N | D_D |
|---|---|---|---|---|---|---|---|---|---|
| A_D | 0/L | L/L | L/H | L/L | 0/H | 0/L | L/H | L/L | L/L |
| N_D | H/L | L/L | L/H | L/L | H/H | H/L | L/H | L/L | L/L |
| D_A | H/L | L/L | L/0 | L/L | H/0 | H/L | L/0 | L/L | L/L |
| D_N | H/L | L/L | L/H | L/L | H/H | H/L | L/H | L/L | L/L |
| A_A | 0/L | L/L | L/0 | L/L | 0/0 | 0/L | L/0 | L/L | L/L |
| A_N | 0/L | L/L | L/H | L/L | 0/H | 0/L | L/H | L/L | L/L |
| N_A | H/L | L/L | L/0 | L/L | H/0 | H/L | L/0 | L/L | L/L |
| N_N | H/L | L/L | L/H | L/L | H/H | H/L | L/H | L/L | L/L |
| D_D | H/L | L/L | L/H | L/L | H/H | H/L | L/H | L/L | L/L |

wherein L indicates data retransmission at physical layer, H indicates data retransmission at high layer and 0 indicates there is no retransmission. L/H indicates data transmitted on primary carrier is retransmitted at physical layer and data transmitted on secondary carrier is retransmitted at high layer; L/L indicates data transmitted on primary carrier is retransmitted at physical layer and data transmitted on secondary carrier is retransmitted at physical layer; H/L indicates data transmitted on primary carrier is retransmitted at high layer and data transmitted on secondary carrier is retransmitted at physical layer; H/H indicates data transmitted on primary carrier is retransmitted at high layer and data transmitted on secondary carrier is retransmitted at high layer; H/0 indicates data transmitted on primary carrier is retransmitted at high layer and no retransmission on secondary carrier; 0/H indicates no retransmission on primary carrier and data transmitted on secondary carrier is retransmitted at high layer; L/0 indicates data transmitted on primary carrier is retransmitted at physical layer and no retransmission on secondary carrier; 0/L indicates no retransmission on primary carrier and data transmitted on secondary carrier is retransmitted at physical layer; 0/0 indicates no retransmission on primary carrier and no retransmission on secondary carrier,
wherein the HARQ-ACK signals are represented as in the following table:

| Number | Signal | Signal Abbreviation |
|---|---|---|
| 1 | ACK/DTX | A_D |
| 2 | NACK/DTX | N_D |
| 3 | DTX/ACK | D_A |
| 4 | DTX/NACK | D_N |
| 5 | ACK/ACK | A_A |
| 6 | ACK/NACK | A_N |

(continued)

| Number | Signal | Signal Abbreviation |
|--------|--------|---------------------|
| 7 | NACK/ACK | N_A |
| 8 | NACK/NACK | N_N |
| 9 | DTX/DTX | D_D |

Brief Description of the Drawings

In order to describe the technical solutions of the embodiments of the present invention more clearly, drawings need to be used in the descriptions of the embodiments are briefly introduced as follows. Apparently, the drawings described below are just some embodiments of the present invention, andperson skilled in the art can obtain other drawings based those drawings without paying any creative effort.

Fig. 1 is a flowchart of an encoding method according to an embodiment of the present invention;
Fig. 2 is a structural diagram of an encoding device according to an embodiment of the present invention; and
Fig. 3 is a structural diagram of another encoding device according to an embodiment of the present invention;

Detailed Description

The technical solutions of the embodiments of the present invention are described clearly and completely as follows in combination with the drawings of the embodiments of the present invention. Apparently, the embodiments to be described are just a part of embodiments of the present invention, instead of all the embodiments. Based on the embodiments of the present invention, any other embodiment obtained by a person skilled in the art without paying any creative effort shall be within the protection scope of the present invention.

One embodiment of the present invention provides an encoding method, i.e., proposes a method for jointly encoding HARQ-ACK when one HS-DPCCH is used for ACK/NACK feedback in a Multi-Carrier in the Downlink (MCDL) mode. In the present embodiment, the method includes: selecting codebook structures, in each codebook structure, where there exist multiple mapping schemes between a codeword of a codebook structure and a signal to be encoded; under each mapping scheme, acquiring a high layer retransmission probability of data according to a pair-wise error probability of the signal to be encoded and a probability of sending the signal to be encoded, and acquiring high layer retransmission cost according to the high layer retransmission probability of data; selecting a mapping scheme corresponding to a predetermined high layer retransmission cost as encoding scheme of the signal to be encoded, and encoding the signal to be encoded according to the encoding scheme.

The encoding method according to the present embodiment not only satisfies the requirement of jointly encoding feedback information responding to data transmitted on two carriers on one HS-DPCCH, but also decreases the error probabilities of pair-wise error of signals, especially those may cause high layer retransmissions, and thereby, reduces unnecessary high layer retransmissions and improves the transmission rate of the system.

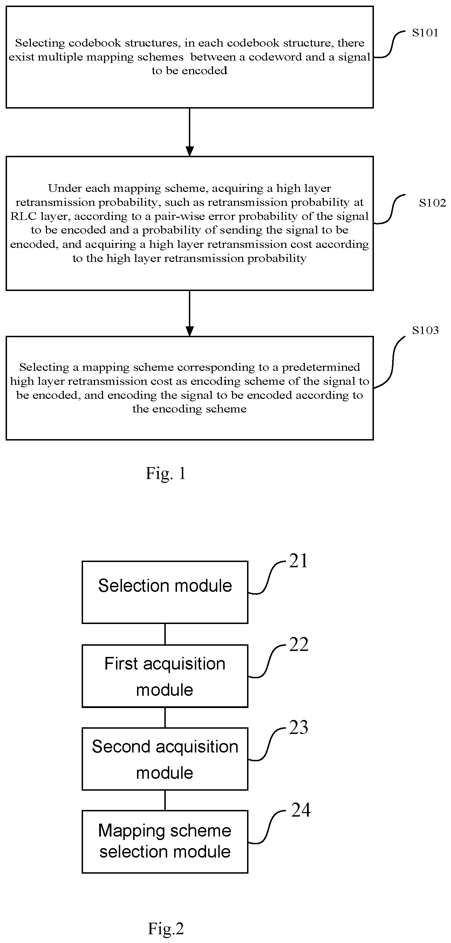

Fig. 1 is a flowchart of an encoding method according to an embodiment of the present invention.

S101: selecting codebook structures, where, in each codebook structure, there exist multiple mapping schemes a codeword of a codebook structure and a signal to be encoded.

For example, during the selection of codebook structures, a codebook structure corresponding to the largest minimum code distance or the largest average code distance may be selected; or a codebook structure corresponding to the largest total code distance or the largest weighted average code distance may be selected; or a symmetrical codebook structure may be selected.

For example, a codebook structure containing a predetermined number of codewords and having a predetermined minimum code distance may be constructed based on a largest size of codewords with a minimum code distance of 6, and a codebook structure obtained through row and column transformation from the largest size of codewords with the minimum code distance of 6. The above method for constructing the codebook structure is a preferred method in the embodiment of the present invention, but the embodiment of the present invention is not limited thereby, and a codebook structure may also be constructed based on other largest codebook structure with a minimum code distance of other value.

S102: under each mapping scheme, acquiring a high layer retransmission probability of data, such as retransmission probability in Radio Link Control (RLC) layer, according to a pair-wise error probability of signal to be encoded and a probability of sending the signal to be encoded, and acquiring a high layer retransmission cost according to the high layer retransmission probability of data.

For example, the step of acquiring the high layer retransmission cost may include: acquiring the high layer retransmission probability of data in each state when user data is transmitted, according to the pair-wise error probability of signal to be encoded causing high layer retransmission and the probability of sending the signal to be encoded; and acquiring the high layer retransmission cost according to the proportion or probability of each state when the given user data is transmitted and the high layer retransmission probability of data.

S103: selecting mapping scheme corresponding to a predetermined high layer retransmission cost as encoding scheme of a signal to be encoded, and encoding the signal to be encoded according to the encoding scheme.

For example, the step of selecting the mapping scheme corresponding to the predetermined high layer retransmission cost may be selecting a mapping scheme corresponding to the minimum high layer retransmission cost. Of course, the embodiment of the present invention is not limited thereby, and a mapping scheme corresponding to a high layer retransmission cost having a difference from the minimum high layer retransmission cost within a certain range may also be selected.

In the above encoding method, a codebook structure is selected according to the minimum code distance or the average code distance; under each mapping scheme, the high layer retransmission probability of data is acquired according to the pair-wise error probability of signal to be encoded and the probability of sending the signal to be encoded, and the high layer retransmission cost is acquired according to the high layer retransmission probability of data; then a mapping scheme is selected corresponding to the predetermined high layer retransmission cost as the encoding scheme of the signal to be encoded, and the signal is encoded according to the encoding scheme. Through the above method, the error probabilities of pair-wise error is decreased, especially those may cause high layer retransmissions. Thereby, unnecessary high layer retransmission is reduced and the transmission rate of the system is improved.

The embodiment of the present invention is described by taking a HARQ-ACK signal as the signal to be encoded, but the embodiment of the present invention is not limited thereby, and the signals to be encoded may be signals on other code channel.

In the embodiment of the present invention, the high layer retransmission cost of data is considered when the HARQ-ACK signal is encoded, and an index for evaluating the high layer retransmission cost is the high layer retransmission probability of data.

In one unit time, possible states of transmitting the user data on the two carriers are shown in Table 1, and the unit time may be 2ms for one sub-frame.

Table 1

| State | Primary carrier has data? | Secondary carrier has data? | State probability | High layer retransmission probability of data |
|---|---|---|---|---|
| State1 | Yes | No | $P_{State1}$ | $P_{trans1-H}$ |
| State2 | No | Yes | $P_{State2}$ | $P_{trans2-H}$ |
| State3 | Yes | Yes | $P_{State3}$ | $P_{trans3-H}$ |

As shown in Equation (1), the high layer retransmission cost $P_{trans-H}$ can be calculated according to the high layer retransmission probability of data.

$$P_{trans-H} = P_{State1}\,P_{trans1-H} + P_{State2}\,P_{trans2-H} + P_{State3}\,P_{trans3-H} \qquad (1)$$

A statistical result of $P_{State1} \sim P_{state3}$ can be acquired through measurement, for example, a statistical result can be acquired by measuring whether the primary carrier and the secondary carrier have data. Generally, the system is in a mixed state, i.e., $P_{state3}$ takes a value in the range from 0.3 to 0.7. $P_{trans1-H} \sim P_{trans3-H}$ are related to the codebook structures; besides, even the same codewords are used, the high layer retransmission probability of data will also be influenced by the different mapping schemes between the signal and the codewords. Under a given mapping scheme between the codewords and the signal, the values of $P_{trans1-H} \sim Pt_{rans3-H}$ can be acquired through simulation. Under the various possible codebook structures, different values of $P_{trans1-H} \sim Pt_{rans3-H}$ can be acquired, and under the given occasion (the values of $P_{trans1-H} \sim Pt_{rans3-H}$ are known) a group of optimum values of $P_{trans1-H} \sim Pt_{rans3-H}$ can be acquired through comparison; thus the minimum high layer retransmission probability of data under the occasion can be acquired according to the group of optimum values of $P_{trans1-H} \sim Pt_{rans3-H}$.

The signal to be jointly encoded in the embodiment of the present invention are shown in Table 2, wherein the DTX/DTX signal is an empty signal and no codeword needs to be transmitted, thus totally eight signals need to be encoded and eight different codewords are required for mapping the signals.

Table 2 HARQ-ACK Signal

| Number | Signal | Signal Abbreviation |
|---|---|---|
| 1 | ACK/DTX | A_D |
| 2 | NACK/DTX | N_D |
| 3 | DTX/ACK | D_A |
| 4 | DTX/NACK | D_N |
| 5 | ACK/ACK | A_A |
| 6 | ACK/NACK | A_N |
| 7 | NACK/ACK | N_A |
| 8 | NACK/NACK | N_N |
| 9 | DTX/DTX | D_D |

The concrete calculation method of the high layer retransmission probability of $Pt_{rans3-H}$ under State 3 is described as follows.

The reception conditions at the UE are shown in Table 3 when the user data and the DTX (empty data) are transmitted by Node B on a single carrier, thereby the event probability of joint signal generated by the UE under State 3 can be acquired, as shown in Table 4.

Table 3

| Each Event Probability of Node B Transmitting Data and UE Receiving Data (Single Carrier) | | |
|---|---|---|
| TTI reception | Logic response (transmitting signal) | Event probability |
| Correct reception | ACK | $P_A$ |
| Error reception | NACK | $P_N$ |
| Not detected | DTX | $P_D$ |

According to the provisions of the 3rd Generation Partnership Project (3GPP) physical level protocol, it generally requires that PA $\geq$ 90% and PD $\leq$ 1%; for the convenience of analysis and calculation, it may be assumed that $P_A$=0.9, $P_N$=0.1 and $P_D$=0.01 in the embodiment of the present invention.

Table 4

| Probability of Response Signal When User Data Is Transmitted On Both Carriers (State 3) | | | |
|---|---|---|---|
| TTI Reception | | Logic response (transmitting signal) | Event probability |
| Primary carrier | Secondary carrier | | |
| Correct reception | Correct reception | ACK/ACK | $P_A P_A$ |
| | Error reception | ACK/NACK | $P_A P_N$ |
| | Not detected | ACK/DTX | $P_A P_D$ |
| Error reception | Correct reception | NACK/ACK | $P_N P_A$ |
| | Error reception | NACK/NACK | $P_N P_N$ |
| | Not detected | NACK/DTX | $P_N P_D$ |
| Not detected | Correct reception | DTX/ACK | $P_D P_A$ |
| | Error reception | DTX/NACK | $P_D P_N$ |
| | Not detected | DTX/DTX | $P_D P_D$ |

When Node B initially transmits user data to the UE, the UE feeds back a HARQ-ACK signal to Node B, but the HARQ-ACK signal received by Node B and the HARQ-ACK signal transmitted by the UE may be consistent or inconsistent (i.e., a pair-wise error occurs) with each other. The pair-wise error will cause Node B to retransmit data, and the detailed data retransmission behaviors are shown in Table 5, while the corresponding pair-wise error probabilities are shown in Table 6.

Table 5 Data Retransmission Behaviors of Node B Triggered by Pair-wise Error

|     | A_D | N_D | D_A | D_N | A_A | A_N | N_A | N_N | D_D |
|-----|-----|-----|-----|-----|-----|-----|-----|-----|-----|
| A_D | 0/L | L/L | L/H | L/L | 0/H | 0/L | L/H | L/L | L/L |
| N_D | H/L | L/L | L/H | L/L | H/H | H/L | L/H | L/L | L/L |
| D_A | H/L | L/L | L/0 | L/L | H/0 | H/L | L/0 | L/L | L/L |
| D_N | H/L | L/L | L/H | L/L | H/H | H/L | L/H | L/L | L/L |
| A_A | 0/L | L/L | L/0 | L/L | 0/0 | 0/L | L/0 | L/L | L/L |
| A_N | 0/L | L/L | L/H | L/L | 0/H | 0/L | L/H | L/L | L/L |
| N_A | H/L | L/L | L/0 | L/L | H/0 | H/L | L/0 | L/L | L/L |
| N_N | H/L | L/L | L/H | L/L | H/H | H/L | L/H | L/L | L/L |
| D_D | H/L | L/L | L/H | L/L | H/H | H/L | L/H | L/L | L/L |

In Table 5, L indicates data retransmission at physical layer, H indicates data retransmission at high layer and 0 indicates there is no retransmission. L/H indicates data transmitted on primary carrier is retransmitted at physical layer and data transmitted on secondary carrier is retransmitted at high layer; L/L indicates data transmitted on primary carrier is retransmitted at physical layer and data transmitted on secondary carrier is retransmitted at physical layer; H/L indicates data transmitted on primary carrier is retransmitted at high layer and data transmitted on secondary carrier is retransmitted at physical layer; H/H indicates data transmitted on primary carrier is retransmitted at high layer and data transmitted on secondary carrier is retransmitted at high layer; H/0 indicates data transmitted on primary carrier is retransmitted at high layer and no retransmission on secondary carrier; 0/H indicates no retransmission on primary carrier and data transmitted on secondary carrier is retransmitted at high layer; L/0 indicates data transmitted on primary carrier is retransmitted at physical layer and no retransmission on secondary carrier; 0/L indicates no retransmission on primary carrier and data transmitted on secondary carrier is retransmitted at physical layer; 0/0 indicates no retransmission on primary carrier and no retransmission on secondary carrier.

Table 6 Pair-wise Error Probabilities

|     | A_D | N_D | D_A | D_N | A_A | A_N | N_A | N_N | D_D |
|-----|-----|-----|-----|-----|-----|-----|-----|-----|-----|
| A_D | $P_{11}$ | $P_{12}$ | $P_{13}$ | $P_{14}$ | $P_{15}$ | $P_{16}$ | $P_{17}$ | $P_{18}$ | $P_{19}$ |
| N_D | $P_{21}$ | $P_{22}$ | $P_{23}$ | $P_{24}$ | $P_{25}$ | $P_{26}$ | $P_{27}$ | $P_{28}$ | $P_{29}$ |
| D_A | $P_{31}$ | $P_{32}$ | $P_{33}$ | $P_{34}$ | $P_{35}$ | $P_{36}$ | $P_{37}$ | $P_{38}$ | $P_{39}$ |
| D_N | $P_{41}$ | $P_{42}$ | $P_{43}$ | $P_{44}$ | $P_{45}$ | $P_{46}$ | $P_{47}$ | $P_{48}$ | $P_{49}$ |
| A_A | $P_{51}$ | $P_{52}$ | $P_{53}$ | $P_{54}$ | $P_{55}$ | $P_{56}$ | $P_{57}$ | $P_{58}$ | $P_{59}$ |
| A_N | $P_{61}$ | $P_{62}$ | $P_{63}$ | $P_{64}$ | $P_{65}$ | $P_{66}$ | $P_{67}$ | $P_{68}$ | $P_{69}$ |
| N_A | $P_{71}$ | $P_{72}$ | $P_{73}$ | $P_{74}$ | $P_{75}$ | $P_{76}$ | $P_{77}$ | $P_{78}$ | $P_{79}$ |
| N_N | $P_{81}$ | $P_{82}$ | $P_{83}$ | $P_{84}$ | $P_{85}$ | $P_{86}$ | $P_{87}$ | $P_{88}$ | $P_{89}$ |
| D_D | $P_{91}$ | $P_{92}$ | $P_{93}$ | $P_{94}$ | $P_{95}$ | $P_{96}$ | $P_{97}$ | $P_{98}$ | $P_{99}$ |

Thus, the high layer retransmission probability of $P_{trans3-H}$ under State 3 is as follows:

$$P_{trans3\text{-}H} = P_A P_D(P_{13} + P_{15} + P_{17}) + P_N P_D(P_{21} + P_{23} + P_{25} + P_{26} + P_{27}) + P_D P_A(P_{31} + P_{35} + P_{36}) + P_D P_N(P_{41} + P_{43} + P_{45} + P_{46} + P_{47}) + P_A P_N(P_{63} + P_{65} + P_{67}) + P_N P_A(P_{71} + P_{75} + P_{76}) +$$

$$P_N P_N(P_{81} + P_{83} + P_{85} + P_{86} + P_{87}) + P_D P_D(P_{91} + P_{93} + P_{95} + P_{96} + P_{97}) \qquad (2)$$

In Equation (2), $P_{13}$, $P_{15}$, $P_{17}$, $P_{21}$, $P_{23}$, $P_{25}$, ..., are pair-wise error probabilities corresponding to the high layer retransmission behaviors in Table 6.

The detailed calculation methods of $P_{trans1\text{-}H}$ and $P_{trans2\text{-}H}$ are described as follows.

Under State 1, Node B transmits the user data on the primary carrier and transmits the DTX on the secondary carrier, and the event probabilities of the UE receiving data are shown in Table 7; the data retransmission behaviors caused by pair-wise error occurring when the HARQ-ACK signal fed back by the UE is received at Node B, and the corresponding pair-wise error probabilities are shown in Tables 8 and 9, respectively. Under State 1, Node B only judges received signal in the state of A_D, N_D and D_D; and under State 2, Node B only judges received signal in the state of D_A, D _N and D_D. If the decoding algorithm of the receiver still judges among the nine signals of Table 2, then Equations (3) and (4) shall be modified correspondingly.

Table 7 Probability of Response Signal When User Data is Transmitted on Primary Carrier and DTX is Transmitted on Secondary Carrier

| TTI Reception | | Logic response (transmitting signal) | Event probability |
|---|---|---|---|
| Primary carrier | User | | |
| Correct reception | Correct reception | ACK/DTX | $P_A$ |
| | Error reception | ACK/ACK | 0 |
| | | ACK/NACK | 0 |
| Error reception | Correct reception | NACK/DTX | $P_N$ |
| | Error reception | NACK/ACK | 0 |
| | | NACK/NACK | 0 |
| Not detected | Correct reception | DTX/DTX | $P_D$ |
| | Error reception | DTX/ACK | 0 |
| | | DTX/NACK | 0 |

Table 8 Data Retransmission Behaviors of Node B Triggered by Pair-wise Error

| | A_D | N_D | D_D |
|---|---|---|---|
| A_D | 0/0 | L/0 | L/0 |
| N_D | H/0 | L/0 | L/0 |
| D_D | H/0 | L/0 | L/0 |

Table 9 Pair-wise Error Probability

| | A_D | N_D | D_D |
|---|---|---|---|
| A_D | $P_{11}'$ | $P_{12}'$ | $P_{19}'$ |
| N_D | $P_{21}'$ | $P_{22}'$ | $P_{29}'$ |
| D_D | $P_{91}'$ | $P_{92}'$ | $P_{99}'$ |

Thus, the calculation equation of the high layer retransmission probability of $P_{trans1\text{-}H}$ under State 1 is as follows:

$$P_{trans1-H} = P_N P_{21}' + P_D P_{91}' \qquad (3)$$

The calculation method of the high layer retransmission probability of $P_{trans2-H}$ under State 2 is similar to that of $P_{trans1-H}$, and herein is not described in details. The calculation equation of the high layer retransmission probability of $P_{trans2-H}$ under State 2 is as follows:

$$P_{trans2-H} = P_N P_{43}'' + P_D P_{93}'' \qquad (4)$$

Through simulation, it is shown that when user is transmitted only on single carrier, the high layer retransmission probability of data is mainly generated by false alarm, then the following equations are tenable:

$$P_{trans1-H} \approx P_D P_{91}' \qquad (5)$$

$$P_{trans2-H} \approx P_D P_{93}'' \qquad (6)$$

The selection of codebook structures is described as follows.

In codeword space having 0-1 sequence of 10 bits, the codebook structures with a minimum code distance of 6 contains 6 codewords at the most. In any codebook structure with the minimum code distance of 6, the code distance between respective codewords is 6, and all such codebook structures are equivalent to each other, i.e., can be converted to each other through linear transformation, wherein Table 10 gives four codebook structures with a code distance of 6.

Table 10

| No. | Codeword | | | | | | | | | |
|---|---|---|---|---|---|---|---|---|---|---|
| A1 | 1 | 1 | 1 | 1 | 1 | 1 | 1 | 1 | 1 | 1 |
| A2 | 0 | 0 | 1 | 1 | 0 | 0 | 1 | 1 | 0 | 0 |
| A3 | 1 | 0 | 0 | 1 | 0 | 1 | 0 | 0 | 1 | 0 |
| A4 | 1 | 0 | 0 | 0 | 1 | 0 | 0 | 1 | 0 | 1 |
| A5 | 0 | 1 | 0 | 0 | 1 | 1 | 1 | 0 | 0 | 0 |
| A6 | 0 | 1 | 1 | 0 | 0 | 0 | 0 | 0 | 1 | 1 |
| No. | Codeword | | | | | | | | | |
| C1 | 1 | 1 | 1 | 1 | 1 | 0 | 0 | 0 | 0 | 0 |
| C2 | 0 | 1 | 0 | 1 | 0 | 1 | 0 | 1 | 0 | 1 |
| C3 | 1 | 1 | 0 | 0 | 0 | 0 | 1 | 1 | 1 | 0 |
| C4 | 0 | 0 | 0 | 1 | 1 | 0 | 1 | 0 | 1 | 1 |
| C5 | 0 | 0 | 1 | 0 | 1 | 1 | 0 | 1 | 1 | 0 |
| C6 | 1 | 0 | 1 | 0 | 0 | 1 | 1 | 0 | 0 | 1 |
| B1 | 0 | 0 | 0 | 0 | 0 | 0 | 0 | 0 | 0 | 0 |
| B2 | 1 | 1 | 0 | 0 | 1 | 1 | 0 | 0 | 1 | 1 |
| B3 | 0 | 1 | 1 | 0 | 1 | 0 | 1 | 1 | 0 | 1 |
| B4 | 0 | 1 | 1 | 1 | 0 | 1 | 1 | 0 | 1 | 0 |
| B5 | 1 | 0 | 1 | 1 | 0 | 0 | 0 | 1 | 1 | 1 |
| B6 | 1 | 0 | 0 | 1 | 1 | 1 | 1 | 1 | 0 | 0 |
| No. | Codeword | | | | | | | | | |
| D1 | 0 | 0 | 0 | 0 | 0 | 1 | 1 | 1 | 1 | 1 |

(continued)

| No. | Codeword | | | | | | | | | |
|-----|---|---|---|---|---|---|---|---|---|---|
| D2 | 1 | 0 | 1 | 0 | 1 | 0 | 1 | 0 | 1 | 0 |
| D3 | 0 | 0 | 1 | 1 | 1 | 1 | 0 | 0 | 0 | 1 |
| D4 | 1 | 1 | 1 | 0 | 0 | 1 | 0 | 1 | 0 | 0 |
| D5 | 1 | 1 | 0 | 1 | 0 | 0 | 1 | 0 | 0 | 1 |
| D6 | 0 | 1 | 0 | 1 | 1 | 0 | 0 | 1 | 1 | 0 |

In Table 10, codebook structure A (A1, A2, A3, A4, A5, A6) is a largest codebook structure with a code distance of 6, and codebook structure B (B1, B2, B3, B4, B5, B6) is a codebook structure composed of inverse codes of codebook structure A with a code distance of 6. The distance between any codeword of codebook structure C (C1, C2, C3, C4, C5, C6) and any codeword of codebook structure A is 5, and the pair-wise code distance of codebook structure C is 6. Codebook structure D (D1, D2, D3, D4, D5, D6) is a codebook structure composed of inverse codes of codebook structure C with a code distance of 6.

The minimum code distance between codebook structure A and codebook structure B, and that between codebook structure C and codebook structure D are both 4.

In the embodiment of the present invention, codebook structure A can be transformed into any maximum codebook structure with a code distance of 6, and any maximum codebook structure with a code distance of 6 can uniquely determine other three accompanied codebook structures.

The codebook structures with a minimum code distance of 5 may be 6A+2C, 6A+C+D, 5A+3C, 4A+4C, etc.

The codebook structures with a minimum code distance of 4 may be 6A+2B, 5A+3B, 4A+4B, 2A+2B+2C+2D, 4A+2C+2D, etc.

Wherein, 6A+2C represents a codebook structure composed of 6 codewords of codebook structure A and any two codewords of codebook structure C; 6A+C+D represents a codebook structure composed of 6 codewords of codebook structure A, one codeword of codebook structure C and one codeword of codebook structure D, and the codeword of codebook structure D is an inverse code of the codeword of codebook structure C; if codewords of codebook structures A and B (or codebook structures C and D) are available simultaneously, the selected codeword of codebook structure B shall be inverse code of the codeword of codebook structure A ..., the rest may be deduced by analogy, and herein are not described in details.

In addition, with respect to the codewords of the codebook structure A (or B), the code distances between codebook structures C, D and A (or B) are all 5, thus codebook structures C, D are equivalent to each other, and vice versa. 6A+2C is substantively the same structure of 6A+2D, 6B+2C and 6B+2D. Since codebook structure A can be converted into any codebook structure with a code distance of 6, it certainly can be converted into codebook structure C as shown in Table 10, and another example of Table 10 can be obtained by exchanging the codewords of codebook structures A and C, as well as codebook structures B and D. Therefore, 6C+2A, 6C+2B, 6D+2A, 6D+2B are substantively equivalent structures of 6A+2C. Other codebook structures also have their substantively same structures, respectively, and herein are not described in details.

Table 11 lists the code distance performances of various codebook structures. It is found that the code distance performances of three codebook structures 6A+C+D, 4A+4B and 2A+2B+2C+2D are relatively better, by considering from the aspects of minimum code distance and average code distance.

Table 11 Comparisons of Codebook Structure Performances of Respective Codebook Structures

| Codebook Structures | Minimum Code Distance | Average Code Distance |
|---------------------|----------------------|----------------------|
| 6A+2C | 5 | 156/28 |
| 5A+3C | 5 | 153/28 |
| 4A+4C | 5 | 152/28 |
| 6A+C+D | 5 | 160/28 |
| 6A+2B | 4 | 156/28 |
| 5A+3B | 4 | 156/28 |
| 4A+4B | 4 | 160/28 |

(continued)

| Codebook Structures | Minimum Code Distance | Average Code Distance |
|---|---|---|
| 2A+2B+2C+2D | 4 | 160/28 |
| 4A+2C+2D | 4 | 156/28 |
| ... | ... | ... |

The encoding method under a codebook structure 6A+C+D is described as follows. The codebook structure 6A+C+D refers to a codebook structure composed of six codewords of codebook structure A, any one codeword of codebook structure C, and any one codeword of codebook structure D which is an inverse code of the codeword of codebook structure C.

After the codebook structure is fixed, under conditions that the transmitting power is given, pair-wise error probabilities between the eight codewords can be measured. There are 28 mapping schemes between the eight codewords and the eight HARQ-ACK signals under the codebook structure 6A+C+D. Under each mapping scheme, the pair-wise error probabilities between the eight HARQ-ACK signals (i.e., $P_{11}$, $P_{12}$, $P_{13}$, ......$P_{99}$ in Table 6) can be acquired according to the measured pair-wise error probability between the eight codewords.

Under a given occasion, a statistical value of $P_{State1} \sim P_{state3}$ can be acquired through measurement. According to the provisions of the 3GPP physical level protocol, it generally requires that $PA \geq 90\%$ and $PD \leq 1\%$; for the convenience of analysis and calculation, it may be assumed that $P_A=0.9$, $P_N=0.1$ and $P_D=0.01$ in the embodiment of the present invention.

Under the above 28 different mapping schemes, $P_{trans1-H}$, $P_{trans2-H}$ and $P_{trans3-H}$ can be acquired by substituting the above values into Equations (2), (3) and (4), and then the high layer retransmission cost $P_{trans-H}$ can be acquired by substituting $P_{trans1-H}$, $P_{trans2-H}$ and $P_{trans3-H}$ into Equation (1). A mapping scheme corresponding to the minimum high layer retransmission cost $P_{trans-H}$ is the optimum mapping scheme, and there may be one or more optimum mapping schemes.

In the dual carrier mode, when user data is transmitted on both carriers, the optimum encoding scheme for the codebook structure 6A+C+D is shown as Scheme 1 in Table 12, and if the compatibility between the joint encoding method and the encoding method in single carrier shall be considered, Scheme 2 may be adopted. Scheme 2 still has a small high layer retransmission probability of data.

Table 12 Optimum Encoding Scheme for 6A+C+D

| Signal | A_D | N_D | D_A | D_N | A_A | A_N | N_A | N_N |
|---|---|---|---|---|---|---|---|---|
| Scheme 1 | A1 | C1 | A2 | D1 | A3 | A4 | A5 | A6 |
| Scheme 2 | C1 | D1 | A1 | A2 | A3 | A4 | A5 | A6 |

If the codebook structure 6A+C+D is used, Node B may have a minimum high layer retransmission probability of data when transmitting data, by means of the encoding scheme given in Table 12.

A1 ~ A6 in Table 12 may be random arrangements of 6 codewords of codebook structure A in Table 10, C1 may be any codeword of codebook structure C, and D1 and C1 are inverse to each other. The codebook structure of the scheme is 6A+C+D, i.e., the eight codewords are composed of six codewords of codebook structure A, one codeword of codebook structure C and one codeword of codebook structure D, wherein the codeword of codebook structure D is inverse to that of codebook structure C. In addition, if the Preamble (PRE) / Postamble (POST) function needs to be supported, the PRE/POST codeword in single carrier mode shall be still used in consideration of the compatibility with the single carrier encoding. Otherwise, one codeword C2 and one codeword D2 may be added as PRE and POST, respectively to expand the codebook structure as 6A+2C+2D, wherein the two codewords of codebook structure D are inverse to those of codebook structure C, respectively.

Table 13 gives an example that adopts Scheme 2 in Table 12. In this example, the codebook structure 6C+A+B that is substantively same as 6A+C+D is actually used.

Table 13 Encoding Example of Codebook Structure 6A+C+D

| Signal | Codeword | | | | | | | | | |
|---|---|---|---|---|---|---|---|---|---|---|
| ACK/DTX | 1 | 1 | 1 | 1 | 1 | 1 | 1 | 1 | 1 | 1 |
| NACK/DTX | 0 | 0 | 0 | 0 | 0 | 0 | 0 | 0 | 0 | 0 |

(continued)

| Signal | Codeword | | | | | | | | | |
|---|---|---|---|---|---|---|---|---|---|---|
| DTX/ACK | 1 | 1 | 1 | 1 | 1 | 0 | 0 | 0 | 0 | 0 |
| DTX/NACK | 0 | 1 | 0 | 1 | 0 | 1 | 0 | 1 | 0 | 1 |
| ACK/ACK | 1 | 1 | 0 | 0 | 0 | 0 | 1 | 1 | 1 | 0 |
| ACK/NACK | 0 | 0 | 0 | 1 | 1 | 0 | 1 | 0 | 1 | 1 |
| NACK/ACK | 0 | 0 | 1 | 0 | 1 | 1 | 0 | 1 | 1 | 0 |
| NACK/NACK | 1 | 0 | 1 | 0 | 0 | 1 | 1 | 0 | 0 | 1 |
| PRE | 0 | 0 | 1 | 0 | 0 | 1 | 0 | 0 | 1 | 0 |
| POST | 0 | 1 | 0 | 0 | 1 | 0 | 0 | 1 | 0 | 0 |

The embodiment of the present invention is not limited thereby, and any codeword, which has a codebook structure 6A+C+D or substantively equivalent thereto and performs mapping between the HARQ-ACK and the codeword with a minimum high layer retransmission probability of data in the given occasion, shall fall within the protection scope of the embodiment of the present invention.

In addition, if the Preamble (PRE) / Postamble (POST) function needs to be supported, one codeword C2 and one codeword D2 may be added as the PRE and the POST respectively, so as to expand the codebook structure into 6A+2C+2D, wherein the two codewords of codebook structure D are inverse to those of codebook structure C, respectively.

When single/dual carrier switching is carried out (i.e., Node B may shut down the secondary carrier to enter a single carrier state upon practical requirement), in order to reduce the total number of codewords of the codebook space, codeword C1 and codeword D1 may be re-used in case of single carrier, e.g., ACK uses codeword C1 and NACK uses codeword D1.

An encoding method under a codebook structure 4A+4B will be described as follows. The codebook structure 4A+4B is a codebook structure composed of four codewords of codebook structure A and four corresponding inverse codes of codebook structure B in Table 10.

After the codebook structure is fixed, under conditions that the transmitting power is given, pair-wise error probabilities between eight codewords can be measured. There are 840 substantively different mapping schemes between the eight codewords in the codebook structure 4A+4B and the eight HARQ-ACK signals. Under each mapping scheme, the value and principle same as those under the codebook structure 6A+C+D are adopted, and then corresponding optimum encoding scheme can be acquired and shown as Scheme 1 and Scheme 2 in Table 14. If the compatibility between the joint encoding method and the encoding method in single carrier shall be considered, i.e., codewords corresponding to signal A_D and N_D shall be inverse to each other, then Scheme 3 in Table 14 may be adopted.

Table 14 4A+4B Optimum Encoding Scheme

| Signal | A_D | N_D | D_A | D_N | A_A | A_N | N_A | N_N |
|---|---|---|---|---|---|---|---|---|
| Scheme 1 | A1 | A2 | A3 | A4 | B4 | B3 | B1 | B2 |
| Scheme 2 | A1 | A2 | A3 | A4 | B2 | B3 | B1 | B4 |
| Scheme 3 | A1 | B1 | B2 | B4 | A2 | B3 | A3 | A4 |

If the codebook structure 4A+4B is used, Node B may have a minimum high layer retransmission probability of data when transmitting data, by means of the encoding scheme given in Table 14 provided that the given requirement is satisfied. A1 ~ A4 in Table 14 may be random arrangements of four codewords of codebook structure A in Table 10, and B1 ~ B4 are inverse codes corresponding to A1 ~ A4. The codebook structure of the scheme is 4A+4B, i.e., the eight codewords are composed of four codewords of codebook structure A and four codewords of codebook structure B, and the codewords of codebook structure B are inverse to those of codebook structure A. When such codebook structure is adopted under the above mapping scheme, Node B will have a minimum high layer retransmission probability of data when transmitting data; besides, as four pairs of inverse codes are used, the decoding becomes convenient in some extent. In addition, if the PRE/POST function needs to be supported, the PRE/POST codeword in single carrier shall be still used in consideration of the compatibility with the encoding method in single carrier. Otherwise, one codeword A5 and one codeword B5(or one codeword C1, one codeword D1 ) can be added as PRE and POST, respectively, to expand the codebook structure into 5A+5B (or 4A+4B+C+D).

An encoding example is given in Table 15 according to Scheme 1 in Table 14, wherein PRE/POST continue to use codeword in single carrier mode.

Table 15 Encoding Example of Codebook Structure 4A+4B

| Signal | Codeword | | | | | | | | | |
|---|---|---|---|---|---|---|---|---|---|---|
| ACK/DTX | 1 | 1 | 1 | 1 | 1 | 1 | 1 | 1 | 1 | 1 |
| NACK/DTX | 0 | 0 | 1 | 1 | 0 | 0 | 1 | 1 | 0 | 0 |
| DTX/ACK | 1 | 0 | 0 | 1 | 0 | 1 | 0 | 0 | 1 | 0 |
| DTX/NACK | 1 | 0 | 0 | 0 | 1 | 0 | 0 | 1 | 0 | 1 |
| ACK/ACK | 0 | 1 | 1 | 1 | 0 | 1 | 1 | 0 | 1 | 0 |
| ACK/NACK | 0 | 1 | 1 | 0 | 1 | 0 | 1 | 1 | 0 | 1 |
| NACK/ACK | 0 | 0 | 0 | 0 | 0 | 0 | 0 | 0 | 0 | 0 |
| NACK/NACK | 1 | 1 | 0 | 0 | 1 | 1 | 0 | 0 | 1 | 1 |
| PRE | 0 | 0 | 1 | 0 | 0 | 1 | 0 | 0 | 1 | 0 |
| POST | 0 | 1 | 0 | 0 | 1 | 0 | 0 | 1 | 0 | 0 |

In the schemes given in Table 14, codebook structure A may be any codebook structure having a code distance of 6, and the codewords of codebook structure B are inverse codes corresponding to those of codebook structure A. Any encoding scheme, which has a codebook structure 4A+4B and a mapping scheme between signal and codeword meets the principle of minimizing high layer retransmission probability of data under the precondition that given requirement is satisfied, shall fall within the scope of the embodiment of the present invention.

In addition, if the PRE/POST function needs to be supported, one codeword A5 and one codeword B5 (or one codeword C1 and one codeword D1) can be added as PRE and POST respectively, so as to expand the codebook structure into 5A+5B (or 4A+4B+C+D).

When single/dual carrier switching is carried out (i.e., Node B may shut down the secondary carrier to enter a single carrier state upon practical requirement), in order to reduce the total number of codewords of the codebook space, codeword A1 and codeword B1 can be reused in case of single carrier, e.g., codeword A1 is used for ACK and codeword B1 is used for NACK.

An encoding method under a codebook structure 2A+2B+2C+2D will be described as follows. The codebook structure 2A+2B+2C+2D is a codebook structure composed of two codewords of codebook structure A, two codewords of codebook structure B, two codewords of codebook structure C and two codewords of codebook structure D in Table 10.

After the codebook structure is fixed, under conditions that the transmitting power is given, pair-wise error probabilities between eight codewords can be measured. Under the different mapping schemes between the eight codewords of the codebook structure 2A+2B+2C+2D and the eight HARQ-ACK signals, with the value and principle same as those under the codebook structure 6A+C+D, corresponding optimum encoding scheme can be acquired and shown as Scheme 1 ~ Scheme 4 in Table 16. If the compatibility between the joint encoding method and the encoding method in single carrier is considered, i.e., codewords corresponding to signal A_D and N_D may be inverse to each other, then Scheme 5 ~ Scheme 7 may be adopted.

Table 16 Optimum Encoding Scheme Under Codebook Structure 2A+2B+2C+2D

| Signal | A_D | N_D | D_A | D_N | A_A | A_N | N_A | N_N |
|---|---|---|---|---|---|---|---|---|
| Scheme 1 | A1 | C1 | A2 | D1 | C2 | B2 | B1 | D2 |
| Scheme 2 | A1 | C1 | A2 | D1 | D2 | B2 | B1 | C2 |
| Scheme 3 | A1 | C1 | B1 | D1 | C2 | B2 | A2 | D2 |
| Scheme 4 | A1 | C1 | B1 | D1 | D2 | B2 | A2 | C2 |
| Scheme 5 | A1 | B1 | C1 | D1 | B2 | C2 | D2 | A2 |
| Scheme 6 | A1 | B1 | C1 | D1 | D2 | B2 | A2 | C2 |

(continued)

| Signal | A_D | N_D | D_A | D_N | A_A | A_N | N_A | N_N |
|--------|-----|-----|-----|-----|-----|-----|-----|-----|
| Scheme 7 | A1 | B1 | C1 | C2 | D2 | B2 | A2 | D1 |

The codebook structure for the above schemes is 2A+2B+2C+2D, i.e., a codebook structure composed of respective two codewords selected from codebook structures A, B, C and D, wherein the codewords of codebook structures A and B are inverse to each other, and the codewords of codebook structures C and D are inverse to each other. Under the above mapping scheme, Node B has a minimum high layer retransmission probability of data when transmitting data; meanwhile, as the code distance is uniform and four pairs of inverse codes are used, the decoding becomes convenient to some extent. In addition, if the PRE/POST function needs to be supported, the PRE/POST codeword in single carrier shall be still used in consideration of the compatibility with the encoding method in single carrier. Otherwise, one codeword A3 and one codeword B3 (or one codeword C3 and one codeword D3) can be added as PRE and POST respectively, so as to expand the codebook structure into 3A+2B+3C+2D (or 2A+2B+3C+3D).

An encoding example is given in Table 17 according to Scheme 5 in Table 16, wherein PRE/POST continue to use codeword in single carrier.

Table 17 Encoding Example of Codebook Structure 2A+2B+2C+2D

| Signal | Codeword | | | | | | | | | |
|--------|---|---|---|---|---|---|---|---|---|---|
| ACK/DTX | 1 | 1 | 1 | 1 | 1 | 1 | 1 | 1 | 1 | 1 |
| NACK/DTX | 0 | 0 | 0 | 0 | 0 | 0 | 0 | 0 | 0 | 0 |
| DTX/ACK | 1 | 1 | 1 | 1 | 1 | 0 | 0 | 0 | 0 | 0 |
| DTX/NACK | 0 | 0 | 0 | 0 | 0 | 1 | 1 | 1 | 1 | 1 |
| ACK/ACK | 1 | 1 | 0 | 0 | 1 | 1 | 0 | 0 | 1 | 1 |
| ACK/NACK | 0 | 1 | 0 | 1 | 0 | 1 | 0 | 1 | 0 | 1 |
| NACK/ACK | 1 | 0 | 1 | 0 | 1 | 0 | 1 | 0 | 1 | 0 |
| NACK/NACK | 0 | 0 | 1 | 1 | 0 | 0 | 1 | 1 | 0 | 0 |
| PRE | 0 | 0 | 1 | 0 | 0 | 1 | 0 | 0 | 1 | 0 |
| POST | 0 | 1 | 0 | 0 | 1 | 0 | 0 | 1 | 0 | 0 |

In the schemes given in Table 16, codewords of codebook structure A may be any codebook structure having a code distance of 6 between codewords, and the codewords of codebook structures B, C and D are three codebook structures exclusively determined from the codewords of codebook structure A, as shown in Table 10. Any encoding scheme, which has a codebook structure 2A+2B+2C+2D and the mapping scheme between signals and codewords meet the principle of minimizing high layer retransmission probability of data, shall fall within the scope of the embodiment of the present invention.

In addition, if the PRE/POST function needs to be supported, one codeword A3 and one codeword B3 (or one codeword C3 and one codeword D3) can be added as PRE and POST respectively, so as to expand the codebook structure into 3A+2B+3C+2D (or 2A+2B+3C+3D).

When single/dual carrier switching is carried out (i.e., Node B may shut down the secondary carrier to enter a single carrier state upon practical requirement), in order to reduce the total number of codewords of the codebook space, codeword A1 and codeword B1 can be reused in case of single carrier, e.g., codeword A1 is used for ACK and codeword B1 is used for NACK.

Under the precondition of minimizing the minimum code distance or average code distance, in the embodiments of the present invention, the optimum mapping schemes are selected between the signals and the codewords according to the principle of minimizing high layer retransmission probability of data, which decrease the probabilities of pair-wise error, especially those that may cause high layer retransmissions, reduce unnecessary high layer retransmissions and improve the transmission rate of the system.

Fig. 2 is a structural diagram of an encoding device according to an embodiment of the present invention, wherein the device includes a selection module 21, a first acquisition module 22, a second acquisition module 23 and a mapping scheme selection module 24.

The selection module 21 is configured to select codebook structures, where, in each codebook structure, there exist multiple mapping schemes between a codeword of a codebook structure and a signal to be encoded.

The first acquisition module 22 is configured to, under each mapping scheme selected by the selection module 21, acquire a high layer retransmission probability of data according to a pair-wise error probability of the signal to be encoded and a probability of sending the signal to be encoded.

The second acquisition module 23 is configured to acquire a high layer retransmission cost according to the high layer retransmission probability of data acquired by the first acquisition module 22; and

The mapping scheme selection module 24 is configured to select mapping scheme corresponding to a predetermined high layer retransmission cost as encoding scheme of the signal to be encoded, and encode the signal to be encoded according to the encoding scheme.

In addition, the selection module 21 is further configured to select a codebook structure corresponding to the largest minimum code distance or the largest average code distance; or to select a codebook structure corresponding to the largest total code distance or the largest weighted average code distance; or to select a symmetrical codebook structure.

The first acquisition module 22 is further configured to acquire the high layer retransmission probability of data in each state when user data is transmitted, according to the pair-wise error probability of the signal to be encoded which cause high layer retransmission and the probability of sending the signal to be encoded.

The second acquisition module 23 is further configured to acquire the high layer retransmission cost according to proportion or probability of each state when the predetermined user data is transmitted and the high layer retransmission probability of data.

The mapping scheme selection module 24 is further configured to select a mapping scheme corresponding to the minimum high layer retransmission cost. Of course, the embodiment of the present invention is not limited thereby, and the second acquisition module 24 can also select a mapping scheme corresponding to a high layer retransmission cost having a difference from the minimum high layer retransmission cost within a certain range.

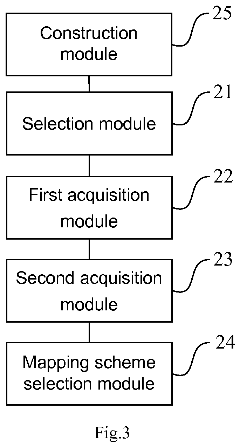

As shown in Fig. 3, the encoding device may further include a construction module 25, which is configured to construct a codebook structure containing a predetermined number of codewords and having a predetermined minimum code distance according to a largest codebook structure with a minimum code distance of 6 and a codebook structure obtained through row and column transformation of the largest codebook structure with the minimum code distance of 6.

In the above encoding device, the selection module 21 selects a codebook structure according to the minimum code distance or the average code distance; the first acquisition module 22 acquires the high layer retransmission probability of data according to the pair-wise error probability of the signal to be encoded and the probability of sending the signal to be encoded, under each mapping scheme between the codewords in the codebook structure and the signal to be encoded; the second acquisition module 23 acquires the high layer retransmission cost according to the high layer retransmission probability of data; and the mapping scheme selection module 24 encodes the signal to be encoded according to the mapping scheme corresponding to the predetermined high layer retransmission cost. Thus, the above device decreases the error probabilities of pair-wise error, especially those that may cause high layer retransmissions, and thereby, reduces unnecessary high layer retransmissions and improves the transmission rate of the system.

Another embodiment of the present invention provides an encoding device, and the encoding device is used for jointly encoding HARQ-ACK signal. The encoding device includes a unit for encoding the HARQ-ACK signal and outputting codeword; wherein,

the outputted codeword is {1,1,1,1,1,1,1,1,1,1} when the HARQ-ACK signal is ACK/DTX; the outputted codeword is {0,0,0,0,0,0,0,0,0,0} when the HARQ-ACK signal is NACK/DTX; the outputted codeword is {1,1,1,1,1,0,0,0,0,0} when the HARQ-ACK signal is DTX/ACK; the outputted codeword is {0,0,0,0,0,1,1,1,1,1} when the HARQ-ACK signal is DTX/NACK; the outputted codeword is {1,0,1,0,1,0,1,0,1,0} when the HARQ-ACK signal is ACK/ACK; the outputted codeword is {1,1,0,0,1,1,0,0,1,1} when the HARQ-ACK signal is ACK/NACK; the outputted codeword is {0,0,1,1,0,0,1,1,0,0} when the HARQ-ACK signal is NACK/ACK; and the outputted codeword is {0,1,0,1,0,1,0,1,0,1} when the HARQ-ACK signal is NACK/NACK.

The embodiment of the present invention also provides a base station including one of the above encoding devices, and the base station may include all or partial of the modules of one of the above encoding devices.

The embodiment of the present invention also provides a User Equipment (UE) including one of the above encoding devices, and the UE may include all or partial of the modules of one of the above encoding devices.

Through the descriptions of the above embodiments, a person skilled in the art can clearly understand that the present invention is implemented by hardware, or by the combination of software and necessary general hardware platform. Based on such understanding, the technical solutions of the present invention can be reflected in a form of software product, which may be stored in a non-volatile storage medium (medium capable of storing program codes such as CD-ROM, U-disk, mobile hard disk, RAM, diskette or CD) and include several instructions for enabling a computer equipment (e.g., personal computer, server or network equipment, etc.) to execute the methods according to the embodiments of the present invention.

A person skilled in the art will appreciate that the drawings are just schematic diagrams of the preferred embodiments, and modules or flows in the drawings may not essential for implementing the present invention.

A person skilled in the art will also appreciate that the modules in the device of the embodiment can be distributed in the device as described in the embodiment, or be changed correspondingly to be located in one or more devices different from the present embodiment. The modules of the above embodiment can be either merged into one module, or further divided into multiple sub-modules.

The serial numbers of the above embodiments of the present invention are just for the convenience of description, without indicating the merits of the embodiments. The above disclosure only relates to several embodiments of the present invention. However, the present invention is not limited thereby, and any change conceived by a person skilled in the art shall fall within the scope of the present invention, in accordance with the appended claims.

**Claims**

1. A method for receiving a jointly encoded Hybrid Automatic Repeat Request-Acknowledgement, HARQ-ACK, signal in a telecommunication system, where two carriers are configured without Multiple Input Multiple Output, MIMO, in downlink, the method comprises:

    transmitting, by a base station, data to a user equipment on the two carriers;
    receiving, by the base station, a jointly encoded HARQ-ACK signal from the user equipment on one Uplink High-Speed Dedicated Physical Control Channel, HS-DPCCH, in response to the data transmitted on the two carriers;
    wherein the jointly encoded HARQ-ACK signal is a 10-bit codeword and
    the 10-bit codeword is {1,1,1,1,1,1,1,1,1,1} when a HARQ-ACK signal is ACK/DTX;
    the 10-bit codeword is {0,0,0,0,0,0,0,0,0,0} when the HARQ-ACK signal is NACK/DTX;
    the 10-bit codeword is {1,1,1,1,1,0,0,0,0,0} when the HARQ-ACK signal is DTX/ACK;
    the 10-bit codeword is {0,0,0,0,0,1,1,1,1,1} when the HARQ-ACK signal is DTX/NACK;
    the 10-bit codeword is {1,0,1,0,1,0,1,0,1,0} when the HARQ-ACK signal is ACK/ACK;
    the 10-bit codeword is {1,1,0,0,1,1,0,0,1,1} when the HARQ-ACK signal is ACK/NACK;
    the 10-bit codeword is {0,0,1,1,0,0,1,1,0,0} when the HARQ-ACK signal is NACK/ACK;
    the 10-bit codeword is {0,1,0,1,0,1,0,1,0,1} when the HARQ-ACK signal is NACK/NACK;
    wherein
    the ACK/DTX indicates that data transmitted on primary carrier is correctly received while no data on secondary carrier is detected; the NACK/DTX indicates that data transmitted on the primary carrier is wrongly received and no data on the secondary carrier is detected; the DTX/ACK indicates that no data on the primary carrier is detected while data transmitted on the secondary carrier is correctly received; the DTX/NACK indicates that no data on the primary carrier is detected and data transmitted on the secondary carrier is wrongly received; the ACK/ACK indicates that data transmitted on the primary carrier is correctly received and data transmitted on the secondary carrier is correctly received; the ACK/NACK indicates that data transmitted on the primary carrier is correctly received while data transmitted on the secondary carrier is wrongly received; the NACK/ACK indicates that data transmitted on the primary carrier is wrongly received while data transmitted on the secondary carrier is correctly received; the NACK/NACK indicates that data transmitted on the primary carrier is wrongly received and data transmitted on the secondary carrier is wrongly received;
    retransmitting, by the base station, the data in accordance with the following table:

|     | A_D | N_D | D_A | D_N | A_A | A_N | N_A | N_N | D_D |
|-----|-----|-----|-----|-----|-----|-----|-----|-----|-----|
| A_D | 0/L | L/L | L/H | L/L | 0/H | 0/L | L/H | L/L | L/L |
| N_D | H/L | L/L | L/H | L/L | H/H | H/L | L/H | L/L | L/L |
| D_A | H/L | L/L | L/0 | L/L | H/0 | H/L | L/0 | L/L | L/L |
| D_N | H/L | L/L | L/H | L/L | H/H | H/L | L/H | L/L | L/L |
| A_A | 0/L | L/L | L/0 | L/L | 0/0 | 0/L | L/0 | L/L | L/L |
| A_N | 0/L | L/L | L/H | L/L | 0/H | 0/L | L/H | L/L | L/L |
| N_A | H/L | L/L | L/0 | L/L | H/0 | H/L | L/0 | L/L | L/L |
| N_N | H/L | L/L | L/H | L/L | H/H | H/L | L/H | L/L | L/L |

(continued)

|  | A_D | N_D | D_A | D_N | A_A | A_N | N_A | N_N | D_D |
|---|---|---|---|---|---|---|---|---|---|
| D_D | H/L | L/L | L/H | L/L | H/H | H/L | L/H | L/L | L/L |

wherein L indicates data retransmission at physical layer, H indicates data retransmission at high layer and 0 indicates there is no retransmission. L/H indicates data transmitted on primary carrier is retransmitted at physical layer and data transmitted on secondary carrier is retransmitted at high layer; L/L indicates data transmitted on primary carrier is retransmitted at physical layer and data transmitted on secondary carrier is retransmitted at physical layer; H/L indicates data transmitted on primary carrier is retransmitted at high layer and data transmitted on secondary carrier is retransmitted at physical layer; H/H indicates data transmitted on primary carrier is retransmitted at high layer and data transmitted on secondary carrier is retransmitted at high layer; H/0 indicates data transmitted on primary carrier is retransmitted at high layer and no retransmission on secondary carrier; 0/H indicates no retransmission on primary carrier and data transmitted on secondary carrier is retransmitted at high layer; L/0 indicates data transmitted on primary carrier is retransmitted at physical layer and no retransmission on secondary carrier; 0/L indicates no retransmission on primary carrier and data transmitted on secondary carrier is retransmitted at physical layer; 0/0 indicates no retransmission on primary carrier and no retransmission on secondary carrier,
wherein the HARQ-ACK signals are represented as in the following table:

| Number | Signal | Signal Abbreviation |
|---|---|---|
| 1 | ACK/DTX | A_D |
| 2 | NACK/DTX | N_D |
| 3 | DTX/ACK | D_A |
| 4 | DTX/NACK | D_N |
| 5 | ACK/ACK | A_A |
| 6 | ACK/NACK | A_N |
| 7 | NACK/ACK | N_A |
| 8 | NACK/NACK | N_N |
| 9 | DTX/DTX | D_D |

2.  The method of claim 1, wherein
    the 10-bit codewords corresponding to the ACK/DTX, the NACK/DTX, the DTX/ACK, the DTX/NACK, the ACK/ACK, the ACK/NACK, the NACK/ACK and the NACK/NACK are codewords satisfying minimum high layer retransmission probability of data.

3.  A base station for receiving a jointly encoded Hybrid Automatic Repeat Request-Acknowledgement, HARQ-ACK, signal in a telecommunication system, where two carriers are configured without Multiple Input Multiple Output, MIMO, in downlink, the base station comprises:

    means configured for transmitting data to a user equipment on the two carriers;
    means configured for receiving a jointly encoded HARQ-ACK signal from the user equipment on one Uplink High-Speed Dedicated Physical Control Channel, HS-DPCCH, in response to the data transmitted on the two carriers;
    wherein the jointly encoded HARQ-ACK signal is a 10-bit codeword and
    the 10-bit codeword is {1,1,1,1,1,1,1,1,1,1} when a HARQ-ACK signal is ACK/DTX;
    the 10-bit codeword is {0,0,0,0,0,0,0,0,0,0} when the HARQ-ACK signal is NACK/DTX;
    the 10-bit codeword is {1,1,1,1,1,0,0,0,0,0} when the HARQ-ACK signal is DTX/ACK;
    the 10-bit codeword is {0,0,0,0,0,1,1,1,1,1} when the HARQ-ACK signal is DTX/NACK;
    the 10-bit codeword is {1,0,1,0,1,0,1,0,1,0} when the HARQ-ACK signal is ACK/ACK;
    the 10-bit codeword is {1,1,0,0,1,1,0,0,1,1} when the HARQ-ACK signal is ACK/NACK;

the 10-bit codeword is {0,0,1,1,0,0,1,1,0,0} when the HARQ-ACK signal is NACK/ACK;
the 10-bit codeword is {0,1,0,1,0,1,0,1,0,1} when the HARQ-ACK signal is NACK/NACK;
wherein
the ACK/DTX indicates that data transmitted on primary carrier is correctly received while no data on secondary carrier is detected; the NACK/DTX indicates that data transmitted on the primary carrier is wrongly received and no data on the secondary carrier is detected; the DTX/ACK indicates that no data on the primary carrier is detected while data transmitted on the secondary carrier is correctly received; the DTX/NACK indicates that no data on the primary carrier is detected and data transmitted on the secondary carrier is wrongly received; the ACK/ACK indicates that data transmitted on the primary carrier is correctly received and data transmitted on the secondary carrier is correctly received; the ACK/NACK indicates that data transmitted on the primary carrier is correctly received while data transmitted on the secondary carrier is wrongly received; the NACK/ACK indicates that data transmitted on the primary carrier is wrongly received while data transmitted on the secondary carrier is correctly received; the NACK/NACK indicates that data transmitted on the primary carrier is wrongly received and data transmitted on the secondary carrier is wrongly received;
means configured for retransmitting the data in accordance with the following table:

|  | A_D | N_D | D_A | D_N | A_A | A_N | N_A | N_N | D_D |
|---|---|---|---|---|---|---|---|---|---|
| A_D | 0/L | L/L | L/H | L/L | 0/H | 0/L | L/H | L/L | L/L |
| N_D | H/L | L/L | L/H | L/L | H/H | H/L | L/H | L/L | L/L |
| D_A | H/L | L/L | L/0 | L/L | H/0 | H/L | L/0 | L/L | L/L |
| D_N | H/L | L/L | L/H | L/L | H/H | H/L | L/H | L/L | L/L |
| A_A | 0/L | L/L | L/0 | L/L | 0/0 | 0/L | L/0 | L/L | L/L |
| A_N | 0/L | L/L | L/H | L/L | 0/H | 0/L | L/H | L/L | L/L |
| N_A | H/L | L/L | L/0 | L/L | H/0 | H/L | L/0 | L/L | L/L |
| N_N | H/L | L/L | L/H | L/L | H/H | H/L | L/H | L/L | L/L |
| D_D | H/L | L/L | L/H | L/L | H/H | H/L | L/H | L/L | L/L |

wherein L indicates data retransmission at physical layer, H indicates data retransmission at high layer and 0 indicates there is no retransmission. L/H indicates data transmitted on primary carrier is retransmitted at physical layer and data transmitted on secondary carrier is retransmitted at high layer; L/L indicates data transmitted on primary carrier is retransmitted at physical layer and data transmitted on secondary carrier is retransmitted at physical layer; H/L indicates data transmitted on primary carrier is retransmitted at high layer and data transmitted on secondary carrier is retransmitted at physical layer; H/H indicates data transmitted on primary carrier is retransmitted at high layer and data transmitted on secondary carrier is retransmitted at high layer; H/0 indicates data transmitted on primary carrier is retransmitted at high layer and no retransmission on secondary carrier; 0/H indicates no retransmission on primary carrier and data transmitted on secondary carrier is retransmitted at high layer; L/0 indicates data transmitted on primary carrier is retransmitted at physical layer and no retransmission on secondary carrier; 0/L indicates no retransmission on primary carrier and data transmitted on secondary carrier is retransmitted at physical layer; 0/0 indicates no retransmission on primary carrier and no retransmission on secondary carrier,
wherein the HARQ-ACK signals are represented as in the following table:

| Number | Signal | Signal Abbreviation |
|---|---|---|
| 1 | ACK/DTX | A_D |
| 2 | NACK/DTX | N_D |
| 3 | DTX/ACK | D_A |
| 4 | DTX/NACK | D_N |
| 5 | ACK/ACK | A_A |
| 6 | ACK/NACK | A_N |

(continued)

| Number | Signal | Signal Abbreviation |
|---|---|---|
| 7 | NACK/ACK | N_A |
| 8 | NACK/NACK | N_N |
| 9 | DTX/DTX | D_D |

**4.** The base station of claim 3, wherein
the 10-bit codewords corresponding to the ACK/DTX, the NACK/DTX, the DTX/ACK, the DTX/NACK, the ACK/ACK, the ACK/NACK, the NACK/ACK and the NACK/NACK are codewords satisfying minimum high layer retransmission probability of data.

**5.** A computer program product, comprising:
computer program codes, which, when executed by a computer unit, will cause the computer unit to perform all the steps of claim 1 or claim 2.

**Patentansprüche**

**1.** Verfahren zum Empfangen eines gemeinsam codierten "Hybrid Automatic Repeat Request-Acknowledgement"- bzw. HARQ-ACK-Signals in einem Telekommunikationssystem, wobei zwei Träger in der Abwärtsstrecke ohne mehrere Eingänge und mehrere Ausgänge bzw. MIMO konfiguriert sind, wobei das Verfahren Folgendes umfasst:

Senden von Daten zu einem Benutzergerät durch eine Basisstation auf den zwei Trägern;
Empfangen eines gemeinsam codierten HARQ-ACK-Signals durch die Basisstation von dem Benutzergerät auf einem "Uplink High-Speed Dedicated Physical Control Channel", HS-DPCCH, als Reaktion auf die auf den zwei Trägern gesendeten Daten;
wobei das gemeinsam codierte HARQ-ACK-Signal ein 10-Bit-Codewort ist und das 10-Bit-Codewort {1,1,1,1,1,1,1,1,1,1} ist, wenn ein HARQ-ACK-Signal ACK/DTX ist;
das 10-Bit-Codewort {0,0,0,0,0,0,0,0,0,0} ist, wenn das HARQ-ACK-Signal NACK/DTX ist;
das 10-Bit-Codewort {1,1,1,1,1,0,0,0,0,0} ist, wenn das HARQ-ACK-Signal DTX/ACK ist;
das 10-Bit-Codewort {0,0,0,0,0,1,1,1,1,1} ist, wenn das HARQ-ACK-Signal DTX/NACK ist;
das 10-Bit-Codewort {1,0,1,0,1,0,1,0,1,0} ist, wenn das HARQ-ACK-Signal ACK/ACK ist;
das 10-Bit-Codewort {1,1,0,0,1,1,0,0,1,1} ist, wenn das HARQ-ACK-Signal ACK/NACK ist;
das 10-Bit-Codewort {0,0,1,1,0,0,1,1,0,0} ist, wenn das HARQ-ACK-Signal NACK/ACK ist;
das 10-Bit-Codewort {0,1,0,1,0,1,0,1,0,1} ist, wenn das HARQ-ACK-Signal NACK/NACK ist;
wobei
das ACK/DTX angibt, dass auf dem primären Träger gesendete Daten korrekt empfangen werden, während auf dem sekundären Träger keine Daten detektiert werden; das NACK/DTX angibt, dass auf dem primären Träger gesendete Daten falsch empfangen werden und auf dem sekundären Träger keine Daten detektiert werden; das DTX/ACK angibt, dass auf dem primären Träger keine Daten detektiert werden, während auf dem sekundären Träger gesendete Daten korrekt empfangen werden; das DTX/NACK angibt, dass auf dem primären Träger keine Daten detektiert werden und auf dem sekundären Träger gesendete Daten falsch empfangen werden; das ACK/ACK angibt, dass auf dem primären Träger gesendete Daten korrekt empfangen werden und auf dem sekundären Träger gesendete Daten korrekt empfangen werden; das ACK/NACK angibt, dass auf dem primären Träger gesendete Daten korrekt empfangen werden, während auf dem sekundären Träger gesendete Daten falsch empfangen werden; das NACK/ACK angibt, dass auf dem primären Träger gesendete Daten falsch empfangen werden, während auf dem sekundären Träger gesendete Daten korrekt empfangen werden; und das NACK/NACK angibt, dass auf dem primären Träger gesendete Daten falsch empfangen werden und auf dem sekundären Träger gesendete Daten falsch empfangen werden;
Neusenden der Daten durch die Basisstation gemäß der folgenden Tabelle:

| | A_D | N_D | D_A | D_N | A_A | A_N | N_A | N_N | D_D |
|---|---|---|---|---|---|---|---|---|---|
| A_D | 0/L | L/L | L/H | L/L | 0/H | 0/L | L/H | L/L | L/L |
| N_D | H/L | L/L | L/H | L/L | H/H | H/L | L/H | L/L | L/L |

(fortgesetzt)

|  | A_D | N_D | D_A | D_N | A_A | A_N | N_A | N_N | D_D |
|---|---|---|---|---|---|---|---|---|---|
| D_A | H/L | L/L | L/0 | L/L | H/0 | H/L | L/0 | L/L | L/L |
| D_N | H/L | L/L | L/H | L/L | H/H | H/L | L/H | L/L | L/L |
| A_A | 0/L | L/L | L/0 | L/L | 0/0 | 0/L | L/0 | L/L | L/L |
| A_N | 0/L | L/L | L/H | L/L | 0/H | 0/L | L/H | L/L | L/L |
| N_A | H/L | L/L | L/0 | L/L | H/0 | H/L | L/0 | L/L | L/L |
| N_N | H/L | L/L | L/H | L/L | H/H | H/L | L/H | L/L | L/L |
| D_D | H/L | L/L | L/H | L/L | H/H | H/L | L/H | L/L | L/L |

wobei L Datenneuübertragung in der Bitübertragungsschicht angibt, H Datenneuübertragung auf hoher Schicht angibt und 0 angibt, dass es keine Neuübertragung gibt, L/H angibt, dass auf dem primären Träger gesendete Daten in der Bitübertragungsschicht neu gesendet werden und auf dem sekundären Träger gesendete Daten auf hoher Schicht neu gesendet werden; L/L angibt, dass auf dem primären Träger gesendete Daten auf der Bitübertragungsschicht neu gesendet werden und auf dem sekundären Träger gesendete Daten auf der Bitübertragungsschicht neu gesendet werden; H/L angibt, dass auf dem primären Träger gesendete Daten auf hoher Schicht neu gesendet werden und auf dem sekundären Träger gesendete Daten auf der Bitübertragungsschicht neu gesendet werden; H/H angibt, dass auf dem primären Träger gesendete Daten auf hoher Schicht neu gesendet werden und auf dem sekundären Träger gesendete Daten auf hoher Schicht neu gesendet werden; H/0 angibt, dass auf dem primären Träger gesendete Daten auf hoher Schicht neu gesendet werden und keine Neuübertragung auf dem sekundären Träger; 0/H keine Neuübertragung auf dem primären Träger angibt und auf dem sekundären Träger gesendete Daten auf hoher Schicht neu gesendet werden; L/0 angibt, dass auf dem primären Träger gesendete Daten auf der Bitübertragungsschicht neu gesendet werden und keine Neuübertragung auf dem sekundären Träger; 0/L keine Neuübertragung auf dem primären Träger angibt und auf dem sekundären Träger gesendete Daten auf der Bitübertragungsschicht neu gesendet werden; 0/0 keine Neuübertragung auf dem primären Träger und keine Neuübertragung auf dem sekundärem Träger angibt, wobei die HARQ-ACK-Signale wie in der folgenden Tabelle repräsentiert werden:

| Zahl | Signal | Signal abkürzung |
|---|---|---|
| 1 | ACK/DTX | A_D |
| 2 | NACK/DTX | N_D |
| 3 | DTX/ACK | D_A |
| 4 | DTX/NACK | D_N |
| 5 | ACK/ACK | A_A |
| 6 | ACK/NACK | A_N |
| 7 | NACK/ACK | N_A |
| 8 | NACK/NACK | N_N |
| 9 | DTX/DTX | D_D |

2. Verfahren nach Anspruch 1, wobei
die dem ACK/DTX, dem NACK/DTX, dem DTX/ACK, dem DTX/NACK, dem ACK/ACK, dem ACK/NACK, dem NACK/ACK und dem NACK/NACK entsprechenden 10-Bit-Codewörter Codewörter sind, die Mindestneuübertragungswahrscheinlichkeit von Daten auf hoher Schicht erfüllen.

3. Basisstation zum Empfangen eines gemeinsam codierten "Hybrid Automatic Repeat Request-Acknowledgement"- bzw. HARQ-ACK-Signals in einem Telekommunikationssystem, wobei zwei Träger in der Abwärtsstrecke ohne mehrere Eingänge und mehrere Ausgänge bzw. MIMO konfiguriert sind, wobei die Basisstation Folgendes umfasst:

Mittel, ausgelegt zum Senden von Daten zu einem Benutzergerät auf den zwei Trägern;

Mittel, ausgelegt zum Empfangen eines gemeinsam codierten HARQ-ACK-Signals von dem Benutzergerät auf einem "Uplink High-Speed Dedicated Physical Control Channel", HS-DPCCH, als Reaktion auf die auf den zwei Trägern gesendeten Daten;

wobei das gemeinsam codierte HARQ-ACK-Signal ein 10-Bit-Codewort ist und das 10-Bit-Codewort {1,1,1,1,1,1,1,1,1,1} ist, wenn ein HARQ-ACK-Signal ACK/DTX ist;

das 10-Bit-Codewort {0,0,0,0,0,0,0,0,0,0} ist, wenn das HARQ-ACK-Signal NACK/DTX ist;

das 10-Bit-Codewort {1,1,1,1,1,0,0,0,0,0} ist, wenn das HARQ-ACK-Signal DTX/ACK ist;

das 10-Bit-Codewort {0,0,0,0,0,1,1,1,1,1} ist, wenn das HARQ-ACK-Signal DTX/NACK ist;

das 10-Bit-Codewort {1,0,1,0,1,0,1,0,1,0} ist, wenn das HARQ-ACK-Signal ACK/ACK ist;

das 10-Bit-Codewort {1,1,0,0,1,1,0,0,1,1} ist, wenn das HARQ-ACK-Signal ACK/NACK ist;

das 10-Bit-Codewort {0,0,1,1,0,0,1,1,0,0} ist, wenn das HARQ-ACK-Signal NACK/ACK ist;

das 10-Bit-Codewort {0,1,0,1,0,1,0,1,0,1} ist, wenn das HARQ-ACK-Signal NACK/NACK ist;

wobei

das ACK/DTX angibt, dass auf dem primären Träger gesendete Daten korrekt empfangen werden, während auf dem sekundären Träger keine Daten detektiert werden; das NACK/DTX angibt, dass auf dem primären Träger gesendete Daten falsch empfangen werden und auf dem sekundären Träger keine Daten detektiert werden; das DTX/ACK angibt, dass auf dem primären Träger keine Daten detektiert werden, während auf dem sekundären Träger gesendete Daten korrekt empfangen werden; das DTX/NACK angibt, dass auf dem primären Träger keine Daten detektiert werden und auf dem sekundären Träger gesendete Daten falsch empfangen werden; das ACK/ACK angibt, dass auf dem primären Träger gesendete Daten korrekt empfangen werden und auf dem sekundären Träger gesendete Daten korrekt empfangen werden; das ACK/NACK angibt, dass auf dem primären Träger gesendete Daten korrekt empfangen werden, während auf dem sekundären Träger gesendete Daten falsch empfangen werden; das NACK/ACK angibt, dass auf dem primären Träger gesendete Daten falsch empfangen werden, während auf dem sekundären Träger gesendete Daten korrekt empfangen werden; und das NACK/NACK angibt, dass auf dem primären Träger gesendete Daten falsch empfangen werden und auf dem sekundären Träger gesendete Daten falsch empfangen werden;

Mittel, ausgelegt zum Neusenden der Daten gemäß der folgenden Tabelle:

|     | A_D | N_D | D_A | D_N | A_A | A_N | N_A | N_N | D_D |
|-----|-----|-----|-----|-----|-----|-----|-----|-----|-----|
| A_D | 0/L | L/L | L/H | L/L | 0/H | 0/L | L/H | L/L | L/L |
| N_D | H/L | L/L | L/H | L/L | H/H | H/L | L/H | L/L | L/L |
| D_A | H/L | L/L | L/0 | L/L | H/0 | H/L | L/0 | L/L | L/L |
| D_N | H/L | L/L | L/H | L/L | H/H | H/L | L/H | L/L | L/L |
| A_A | 0/L | L/L | L/0 | L/L | 0/0 | 0/L | L/0 | L/L | L/L |
| A_N | 0/L | L/L | L/H | L/L | 0/H | 0/L | L/H | L/L | L/L |
| N_A | H/L | L/L | L/0 | L/L | H/0 | H/L | L/0 | L/L | L/L |
| N_N | H/L | L/L | L/H | L/L | H/H | H/L | L/H | L/L | L/L |
| D_D | H/L | L/L | L/H | L/L | H/H | H/L | L/H | L/L | L/L |

wobei L Datenneuübertragung in der Bitübertragungsschicht angibt, H Datenneuübertragung auf hoher Schicht angibt und 0 angibt, dass es keine Neuübertragung gibt, L/H angibt, dass auf dem primären Träger gesendete Daten in der Bitübertragungsschicht neu gesendet werden und auf dem sekundären Träger gesendete Daten auf hoher Schicht neu gesendet werden; L/L angibt, dass auf dem primären Träger gesendete Daten auf der Bitübertragungsschicht neu gesendet werden und auf dem sekundären Träger gesendete Daten auf der Bitübertragungsschicht neu gesendet werden; H/L angibt, dass auf dem primären Träger gesendete Daten auf hoher Schicht neu gesendet werden und auf dem sekundären Träger gesendete Daten auf der Bitübertragungsschicht neu gesendet werden; H/H angibt, dass auf dem primären Träger gesendete Daten auf hoher Schicht neu gesendet werden und auf dem sekundären Träger gesendete Daten auf hoher Schicht neu gesendet werden; H/0 angibt, dass auf dem primären Träger gesendete Daten auf hoher Schicht neu gesendet werden und keine Neuübertragung auf dem sekundären Träger; 0/H keine Neuübertragung auf dem primären Träger angibt und auf dem sekundären Träger gesendete Daten auf hoher Schicht neu gesendet werden; L/0 angibt, dass auf dem primären Träger gesendete Daten auf der Bitübertragungsschicht neu gesendet werden und keine Neuübertragung auf dem sekundären Träger; 0/L keine Neuübertragung auf dem primären Träger angibt und auf dem sekundären Träger gesendete Daten auf der Bitübertragungsschicht neu gesendet werden; 0/0 keine Neuübertragung auf primären Träger und keine Neuübertragung auf sekundärem Träger angibt, wobei die HARQ-ACK-Signale wie in der folgenden Tabelle repräsentiert werden:

| Zahl | Signal | Signalabkürzung |
|------|--------|-----------------|
| 1 | ACK/DTX | A_D |
| 2 | NACK/DTX | N_D |
| 3 | DTX/ACK | D_A |
| 4 | DTX/NACK | D_N |
| 5 | ACK/ACK | A_A |
| 6 | ACK/NACK | A_N |
| 7 | NACK/ACK | N_A |
| 8 | NACK/NACK | N_N |
| 9 | DTX/DTX | D_D |

4. Basisstation nach Anspruch 3, wobei
die dem ACK/DTX, dem NACK/DTX, dem DTX/ACK, dem DTX/NACK, dem ACK/ACK, dem ACK/NACK, dem NACK/ACK und dem NACK/NACK entsprechenden 10-Bit-Codewörter Codewörter sind, die Mindestneuübertragungswahrscheinlichkeit von Daten auf hoher Schicht erfüllen.

5. Computerprogrammprodukt, umfassend:
Computerprogrammcodes, die, wenn sie durch eine Computereinheit ausgeführt werden, bewirken, dass die Computereinheit alle Schritte von Anspruch 1 oder Anspruch 2 ausführt.

**Revendications**

1. Procédé de réception d'un signal d'Acquittement de Demande de Répétition Automatique Hybride, HARQ-ACK, codé conjointement dans un système de télécommunication, où deux porteuses sont configurées sans Entrées Multiples-Sorties Multiples, MIMO, en liaison descendante, le procédé comprenant :

la transmission, par une station de base, de données à un équipement utilisateur sur les deux porteuses ;
la réception, par la station de base, d'un signal HARQ-ACK codé conjointement en provenance de l'équipement utilisateur sur un canal de commande physique dédié à haut débit de liaison montante, HS-DPCCH, en réponse aux données transmises sur les deux porteuses ;
le signal HARQ-ACK codé conjointement étant un mot de code à 10 bits et
le mot de code à 10 bits étant {1, 1, 1, 1, 1, 1, 1, 1, 1, 1} lorsqu'un signal HARQ-ACK est ACK/DTX ;
le mot de code à 10 bits étant {0, 0, 0, 0, 0, 0, 0, 0, 0, 0} lorsque le signal HARQ-ACK est NACK/DTX ;
le mot de code à 10 bits étant {1, 1, 1, 1, 1, 0, 0, 0, 0, 0} lorsque le signal HARQ-ACK est DTX/ACK ;
le mot de code à 10 bits étant {0, 0, 0, 0, 0, 1, 1, 1, 1, 1} lorsque le signal HARQ-ACK est DTX/NACK ;
le mot de code à 10 bits étant {1, 0, 1, 0, 1, 0, 1, 0, 1, 0} lorsque le signal HARQ-ACK est ACK/ACK ;
le mot de code à 10 bits étant {1, 1, 0, 0, 1, 1, 0, 0, 1, 1} lorsque le signal HARQ-ACK est ACK/NACK ;
le mot de code à 10 bits étant {0, 0, 1, 1, 0, 0, 1, 1, 0, 0} lorsque le signal HARQ-ACK est NACK/ACK ;
le mot de code à 10 bits étant {0, 1, 0, 1, 0, 1, 0, 1, 0, 1} lorsque le signal HARQ-ACK est NACK/NACK ;
ACK/DTX indiquant que des données transmises sur une porteuse primaire sont correctement reçues tandis qu'aucune donnée sur une porteuse secondaire n'est détectée ; NACK/DTX indiquant que des données transmises sur la porteuse primaire sont incorrectement reçues et qu'aucune donnée sur la porteuse secondaire n'est détectée ; DTX/ACK indiquant qu'aucune donnée sur la porteuse primaire n'est détectée tandis que des données transmises sur la porteuse secondaire sont correctement reçues ; DTX/NACK indiquant qu'aucune donnée sur la porteuse primaire n'est détectée et que des données transmises sur la porteuse secondaire sont incorrectement reçues ; ACK/ACK indiquant que des données transmises sur la porteuse primaire sont correctement reçues et que des données transmises sur la porteuse secondaire sont correctement reçues ; ACK/NACK indiquant que des données transmises sur la porteuse primaire sont correctement reçues tandis que des données transmises sur la porteuse secondaire sont incorrectement reçues ;

NACK/ACK indiquant que des données transmises sur la porteuse primaire sont incorrectement reçues tandis que des données transmises sur la porteuse secondaire sont correctement reçues ; NACK/NACK indiquant que des données transmises sur la porteuse primaire sont incorrectement reçues et que des données transmises sur la porteuse secondaire sont incorrectement reçues ;

la retransmission, par la station de base, des données conformément au tableau suivant :

|     | A_D | N_D | D_A | D_N | A_A | A_N | N_A | N_N | D_D |
|-----|-----|-----|-----|-----|-----|-----|-----|-----|-----|
| A_D | 0/L | L/L | L/H | L/L | 0/H | 0/L | L/H | L/L | L/L |
| N_D | H/L | L/L | L/H | L/L | H/H | H/L | L/H | L/L | L/L |
| D_A | H/L | L/L | L/0 | L/L | H/0 | H/L | L/0 | L/L | L/L |
| D_N | H/L | L/L | L/H | L/L | H/H | H/L | L/H | L/L | L/L |
| A_A | 0/L | L/L | L/0 | L/L | 0/0 | 0/L | L/0 | L/L | L/L |
| A_N | 0/L | L/L | L/H | L/L | 0/H | 0/L | L/H | L/L | L/L |
| N_A | H/L | L/L | L/0 | L/L | H/0 | H/L | L/0 | L/L | L/L |
| N_N | H/L | L/L | L/H | L/L | H/H | H/L | L/H | L/L | L/L |
| D_D | H/L | L/L | L/H | L/L | H/H | H/L | L/H | L/L | L/L |

L indiquant une retransmission de données au niveau d'une couche physique, H indiquant une retransmission de données au niveau d'une couche haute et 0 indiquant qu'il n'y a aucune retransmission, L/H indiquant que des données transmises sur une porteuse primaire sont retransmises au niveau d'une couche physique et que des données transmises sur une porteuse secondaire sont retransmises au niveau d'une couche haute ; L/L indiquant que des données transmises sur une porteuse primaire sont retransmises au niveau d'une couche physique et que des données transmises sur une porteuse secondaire sont retransmises au niveau d'une couche physique ; H/L indiquant que des données transmises sur une porteuse primaire sont retransmises au niveau d'une couche haute et que des données transmises sur une porteuse secondaire sont retransmises au niveau d'une couche physique ; H/H indiquant que des données transmises sur une porteuse primaire sont retransmises au niveau d'une couche haute et que des données transmises sur une porteuse secondaire sont retransmises au niveau d'une couche haute ; H/0 indiquant que des données transmises sur une porteuse primaire sont retransmises au niveau d'une couche haute et aucune retransmission sur une porteuse secondaire ; 0/H indiquant aucune retransmission sur une porteuse primaire et que des données transmises sur une porteuse secondaire sont retransmises au niveau d'une couche haute ; L/0 indiquant que des données transmises sur une porteuse primaire sont retransmises au niveau d'une couche physique et aucune retransmission sur une porteuse secondaire ; 0/L indiquant aucune retransmission sur une porteuse primaire et que des données transmises sur une porteuse secondaire sont retransmises au niveau d'une couche physique ; 0/0 indiquant aucune retransmission sur une porteuse primaire et aucune retransmission sur une porteuse secondaire,

les signaux HARQ-ACK étant représentés comme dans le tableau suivant :

| Numéro | Signal | Abréviation de signal |
|--------|--------|-----------------------|
| 1 | ACK/DTX | A_D |
| 2 | NACK/DTX | N_D |
| 3 | DTX/ACK | D_A |
| 4 | DTX/NACK | D_N |
| 5 | ACK/ACK | A_A |
| 6 | ACK/NACK | A_N |

(suite)

| Numéro | Signal | Abréviation de signal |
|--------|--------|----------------------|
| 7 | NACK/ACK | N_A |
| 8 | NACK/NACK | N_N |
| 9 | DTX/DTX | D_D |

**2.** Procédé selon la revendication 1,
les mots de code à 10 bits correspondant à ACK/DTX, à NACK/DTX, à DTX/ACK, à DTX/NACK, à ACK/ACK, à ACK/NACK, à NACK/ACK et à NACK/NACK étant des mots de code respectant une probabilité de retransmission minimale de couche haute des données.

**3.** Station de base pour recevoir un signal d'Acquittement de Demande de Répétition Automatique Hybride, HARQ-ACK, codé conjointement dans un système de télécommunication, où deux porteuses sont configurées sans Entrées Multiples-Sorties Multiples, MIMO, en liaison descendante, la station de base comprenant :

des moyens configurés pour transmettre des données à un équipement utilisateur sur les deux porteuses ;
des moyens configurés pour recevoir un signal HARQ-ACK codé conjointement en provenance de l'équipement utilisateur sur un canal de commande physique dédié à haut débit de liaison montante, HS-DPCCH, en réponse aux données transmises sur les deux porteuses ;
le signal HARQ-ACK codé conjointement étant un mot de code à 10 bits et
le mot de code à 10 bits étant {1, 1, 1, 1, 1, 1, 1, 1, 1, 1} lorsqu'un signal HARQ-ACK est ACK/DTX ;
le mot de code à 10 bits étant {0, 0, 0, 0, 0, 0, 0, 0, 0, 0} lorsque le signal HARQ-ACK est NACK/DTX ;
le mot de code à 10 bits étant {1, 1, 1, 1, 1, 0, 0, 0, 0, 0} lorsque le signal HARQ-ACK est DTX/ACK ;
le mot de code à 10 bits étant {0, 0, 0, 0, 0, 1, 1, 1, 1, 1} lorsque le signal HARQ-ACK est DTX/NACK ;
le mot de code à 10 bits étant {1, 0, 1, 0, 1, 0, 1, 0, 1, 0} lorsque le signal HARQ-ACK est ACK/ACK ;
le mot de code à 10 bits étant {1, 1, 0, 0, 1, 1, 0, 0, 1, 1} lorsque le signal HARQ-ACK est ACK/NACK ;
le mot de code à 10 bits étant {0, 0, 1, 1, 0, 1, 1, 0, 0} lorsque le signal HARQ-ACK est NACK/ACK ;
le mot de code à 10 bits étant {0, 1, 0, 1, 0, 1, 0, 1, 0, 1} lorsque le signal HARQ-ACK est NACK/NACK ;
ACK/DTX indiquant que des données transmises sur une porteuse primaire sont correctement reçues tandis qu'aucune donnée sur une porteuse secondaire n'est détectée ; NACK/DTX indiquant que des données transmises sur la porteuse primaire sont incorrectement reçues et qu'aucune donnée sur la porteuse secondaire n'est détectée ; DTX/ACK indiquant qu'aucune donnée sur la porteuse primaire n'est détectée tandis que des données transmises sur la porteuse secondaire sont correctement reçues ; DTX/NACK indiquant qu'aucune donnée sur la porteuse primaire n'est détectée et que des données transmises sur la porteuse secondaire sont incorrectement reçues ; ACK/ACK indiquant que des données transmises sur la porteuse primaire sont correctement reçues et que des données transmises sur la porteuse secondaire sont correctement reçues ; ACK/NACK indiquant que des données transmises sur la porteuse primaire sont correctement reçues tandis que des données transmises sur la porteuse secondaire sont incorrectement reçues ;
NACK/ACK indiquant que des données transmises sur la porteuse primaire sont incorrectement reçues tandis que des données transmises sur la porteuse secondaire sont correctement reçues ; NACK/NACK indiquant que des données transmises sur la porteuse primaire sont incorrectement reçues et que des données transmises sur la porteuse secondaire sont incorrectement reçues ;
des moyens configurés pour retransmettre les données conformément au tableau suivant :

|     | A_D | N_D | D_A | D_N | A_A | A_N | N_A | N_N | D_D |
|-----|-----|-----|-----|-----|-----|-----|-----|-----|-----|
| A_D | 0/L | L/L | L/H | L/L | 0/H | 0/L | L/H | L/L | L/L |
| N_D | H/L | L/L | L/H | L/L | H/H | H/L | L/H | L/L | L/L |
| D_A | H/L | L/L | L/0 | L/L | H/0 | H/L | L/0 | L/L | L/L |
| D_N | H/L | L/L | L/H | L/L | H/H | H/L | L/H | L/L | L/L |
| A_A | 0/L | L/L | L/0 | L/L | 0/0 | 0/L | L/0 | L/L | L/L |
| A_N | 0/L | L/L | L/H | L/L | 0/H | 0/L | L/H | L/L | L/L |

(suite)

|  | A_D | N_D | D_A | D_N | A_A | A_N | N_A | N_N | D_D |
|---|---|---|---|---|---|---|---|---|---|
| N_A | H/L | L/L | L/0 | L/L | H/0 | H/L | L/0 | L/L | L/L |
| N_N | H/L | L/L | L/H | L/L | H/H | H/L | L/H | L/L | L/L |
| D_D | H/L | L/L | L/H | L/L | H/H | H/L | L/H | L/L | L/L |

L indiquant une retransmission de données au niveau d'une couche physique, H indiquant une retransmission de données au niveau d'une couche haute et 0 indiquant qu'il n'y a aucune retransmission, L/H indiquant que des données transmises sur une porteuse primaire sont retransmises au niveau d'une couche physique et que des données transmises sur une porteuse secondaire sont retransmises au niveau d'une couche haute ; L/L indiquant que des données transmises sur une porteuse primaire sont retransmises au niveau d'une couche physique et que des données transmises sur une porteuse secondaire sont retransmises au niveau d'une couche physique ; H/L indiquant que des données transmises sur une porteuse primaire sont retransmises au niveau d'une couche haute et que des données transmises sur une porteuse secondaire sont retransmises au niveau d'une couche physique ; H/H indiquant que des données transmises sur une porteuse primaire sont retransmises au niveau d'une couche haute et que des données transmises sur une porteuse secondaire sont retransmises au niveau d'une couche haute ; H/0 indiquant que des données transmises sur une porteuse primaire sont retransmises au niveau d'une couche haute et aucune retransmission sur une porteuse secondaire ; 0/H indiquant aucune retransmission sur une porteuse primaire et que des données transmises sur une porteuse secondaire sont retransmises au niveau d'une couche haute ; L/0 indiquant que des données transmises sur une porteuse primaire sont retransmises au niveau d'une couche physique et aucune retransmission sur une porteuse secondaire ; 0/L indiquant aucune retransmission sur une porteuse primaire et que des données transmises sur une porteuse secondaire sont retransmises au niveau d'une couche physique ; 0/0 indiquant aucune retransmission sur une porteuse primaire et aucune retransmission sur une porteuse secondaire,
les signaux HARQ-ACK étant représentés comme dans le tableau suivant :

| Numéro | Signal | Abréviation de signal |
|---|---|---|
| 1 | ACK/DTX | A_D |
| 2 | NACK/DTX | N_D |
| 3 | DTX/ACK | D_A |
| 4 | DTX/NACK | D_N |
| 5 | ACK/ACK | A_A |
| 6 | ACK/NACK | A_N |
| 7 | NACK/ACK | N_A |
| 8 | NACK/NACK | N_N |
| 9 | DTX/DTX | D_D |

4. Station de base selon la revendication 3,
les mots de code à 10 bits correspondant à ACK/DTX, à NACK/DTX, à DTX/ACK, à DTX/NACK, à ACK/ACK, à ACK/NACK, à NACK/ACK et à NACK/NACK étant des mots de code respectant une probabilité de retransmission minimale de couche haute des données.

5. Produit de programme informatique, comprenant :
des codes de programme informatique, qui, lorsqu'ils sont exécutés par une unité informatique, amèneront l'unité informatique à réaliser toutes les étapes selon la revendication 1 ou 2.

Selecting codebook structures, in each codebook structure, there exist multiple mapping schemes between a codeword and a signal to be encoded

S101

Under each mapping scheme, acquiring a high layer retransmission probability, such as retransmission probability at RLC layer, according to a pair-wise error probability of the signal to be encoded and a probability of sending the signal to be encoded, and acquiring a high layer retransmission cost according to the high layer retransmission probability

S102

Selecting a mapping scheme corresponding to a predetermined high layer retransmission cost as encoding scheme of the signal to be encoded, and encoding the signal to be encoded according to the encoding scheme

S103

Fig. 1

Selection module

21

First acquisition module

22

Second acquisition module

23

Mapping scheme selection module

24

Fig.2

Fig.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• 3GPP TSG-RAN WG1: "Introduction of Dual-Cell HSDPA Operation on Adjacent Carriers. *WG1 Meeting 54bis, 29.09.2008-03.10.2008, no. R1-084030,* 03 October 2008, http://ftp.3gpp.org/ftp/tsg_ran/WG1_RL1/TSGR1_54b/Docs/R1-084030.zip